(19) **Europäisches Patentamt / European Patent Office / Office européen des brevets**

(11) **EP 4 780 068 A1**

(12) **EUROPEAN PATENT APPLICATION**
published in accordance with Art. 153(4) EPC

(43) Date of publication:
**22.07.2026 Bulletin 2026/30**

(21) Application number: **24870405.8**

(22) Date of filing: **06.09.2024**

(51) International Patent Classification (IPC):
**H04W 36/00** (2009.01)

(52) Cooperative Patent Classification (CPC):
**H04W 36/00; H04W 72/23; H04W 74/0833**

(86) International application number:
**PCT/CN2024/117395**

(87) International publication number:
**WO 2025/066859 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311272468**

(71) Applicant: **HUAWEI TECHNOLOGIES CO., LTD.**
**Shenzhen 518129 (CN)**

(72) Inventors:
• **YU, Tong**
  **Shenzhen, Guangdong 518129 (CN)**
• **SHI, Meng**
  **Shenzhen, Guangdong 518129 (CN)**
• **YANG, Liu**
  **Shenzhen, Guangdong 518129 (CN)**
• **LIAO, Shuri**
  **Shenzhen, Guangdong 518129 (CN)**
• **DOU, Shengyue**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND COMMUNICATION APPARATUS**

(57) This application provides a communication method and a communication apparatus. The communication method includes: A network device determines first configuration information, where the first configuration information is used to configure, after a terminal device camps on a target cell through a cell reselection process and before the terminal device retrieves a system information block SIB1 message of the target cell, a configuration parameter of paging and/or a configuration parameter of random access of the terminal device in the target cell; the network device sends the first configuration information to the terminal device; after the terminal device camps on the target cell through the cell reselection process and before the terminal device retrieves the system information block SIB1 message of the target cell, based on the first configuration information, the terminal device receives paging of the terminal device in the target cell and/or initiates random access of the terminal device in the target cell. According to the method in embodiments of this application, user service experience of the terminal device during cell reselection can be improved.

FIG. 5

## Description

This application claims priority to Chinese Patent Application No. 202311272468.1, filed with the China National Intellectual Property Administration on September 27, 2023 and entitled "COMMUNICATION METHOD AND COMMUNICATION APPARATUS", which is incorporated herein by reference in its entirety.

## TECHNICAL FIELD

Embodiments of this application relate to the communication field, and specifically, to a communication method and a communication apparatus.

## BACKGROUND

In a cell reselection process, after a terminal device camps on a cell, when the terminal device moves or a satellite moves in an NTN scenario, the terminal device may need to switch to another cell with a higher priority or a better signal for camping. At present, after triggering a cell reselection condition, the terminal device detects a synchronization signal and PBCH block (synchronization signal and PBCH block, SSB) message of a neighboring cell, then detects a system information block 1 (system information block 1, SIB1) message of the neighboring cell, finds a target cell according to a cell reselection rule, and camps on the target cell. The "neighboring cell" is a cell adjacent to a source cell currently accessed by the terminal device.

However, at present, in the foregoing cell reselection process in which the target cell is camped on or the SIB1 message is detected, user service experience of the terminal device is poor.

## SUMMARY

This application provides a communication method and a communication apparatus, to improve user service experience of a terminal device during cell reselection.

According to a first aspect, a communication method is provided. The method is applied to a terminal device. For example, the method may be performed by the terminal device, or may be performed by a module (for example, a chip or a circuit) in the terminal device, or may be performed by a logical node, a logical module, or software that can implement all or some functions of the terminal device. This is not limited in this application.

The method includes: receiving first configuration information sent by a network device, where the first configuration information is used to configure a configuration parameter of paging and/or a configuration parameter of random access of the terminal device in a target cell, and the target cell is a neighboring cell of a source cell on which the terminal device currently camps; and after the target cell is camped on through a cell reselection process and before a system information block SIB1 message of the target cell is retrieved, based on the first configuration information, receiving paging of the terminal device in the target cell and/or initiating random access of the terminal device in the target cell.

It should be understood that, in the cell reselection process in the first aspect, after detecting an SSB message of a neighboring cell, the terminal device may determine the target cell in the cell reselection process based on a detection result of the SSB message of the neighboring cell. In other words, the target cell is the most appropriate cell selected by the terminal device from a plurality of neighboring cells. Then, after camping on the target cell, the terminal device searches for the SIB1 message of the target cell. In this way, the terminal device needs to measure a SIB1 message of only one target cell in one period. In other words, a small quantity of SIB1 messages need to be searched for in the cell reselection process, thereby reducing power consumption overheads of the terminal device and reducing a search period of the SIB1 message.

However, in a time period after the terminal device camps on the target cell and before the terminal device retrieves the SIB1 message of the target cell, the terminal device has no parameter configuration of paging and parameter configuration of access of the target cell, and therefore cannot receive paging or initiate access. In other words, before camping on the target cell, the terminal device may use a parameter configuration of paging or a parameter configuration of access of the source cell. After the terminal device retrieves the SIB1 message of the target cell, the terminal device may use the parameter configuration of paging or the parameter configuration of access of the target cell in the SIB1 message. However, in an intermediate time period, the terminal device have no available parameter configuration of paging and parameter configuration of access.

Therefore, specifically, in the communication method shown in the first aspect, in the time period after the terminal device camps on the target cell and before the terminal device retrieves the SIB1 message of the target cell, based on the first configuration information sent by the network device, the terminal device may determine configuration information of paging and/or configuration information of random access in the time period, and receive paging of the terminal device in the target cell and/or initiate random access of the terminal device in the target cell in the time period.

The first configuration information may be indication information indicating to determine the parameter configuration of paging and the parameter configuration of access, or may be a configuration parameter related to a paging process and/or a configuration parameter related to a random access procedure. For example, the configuration parameter of paging may include a paging cycle, a paging channel configuration, and the like. The configuration parameter of random access may include a time-frequency resource location of a random access occasion (RACH occasion, RO), a root sequence number of a preamble (preamble), and the like.

Optionally, the configuration parameter of the random access may further include a configuration parameter of two-step random access or a configuration parameter of dedicated random access. For example, the configuration parameter of the two-step random access may include a physical random access channel (physical random access channel, PRACH) type, and the like. The configuration parameter of the dedicated random access may include a quantity of non-dedicated random access preambles, a configuration of a preamble group, and the like.

According to the foregoing method, the terminal device may receive paging or initiate access in the time period after the terminal device camps on the target cell and before the terminal device retrieves the SIB1 message of the target cell. In this way, when a user uses the terminal device, a problem that the terminal device cannot receive paging or initiate access in some time periods due to cell reselection of the terminal device does not occur, thereby improving user service experience of the terminal device.

With reference to the first aspect, in some implementations of the first aspect, the first configuration information includes indication information indicating whether the configuration parameter of paging of the target cell is the same as that of the source cell, and/or whether the configuration parameter of random access of the target cell is the same as that of the source cell; and when the configuration parameter of paging of the target cell is the same as that of the source cell, and/or the configuration parameter of random access of the target cell is the same as that of the source cell, based on the first configuration information, receiving paging of the terminal device in the target cell and/or initiating random access of the terminal device in the target cell include/includes: based on the configuration parameter of the paging and/or the configuration parameter of the random access of the source cell, receiving paging of the terminal device in the target cell and/or initiating random access of the terminal device in the target cell.

It should be understood that, a value of the indication information in the first configuration information may be true or false. If the value is true, it indicates that the configuration parameter of paging of the target cell is the same as that of the source cell, and/or the configuration parameter of random access of the target cell is the same as that of the source cell. If the value is false, it indicates that the configuration parameter of paging of the target cell is different from that of the source cell, and/or the configuration parameter of random access of the target cell is different from that of the source cell. In this way, when the value of the indication information is true, the terminal device may continue to use the configuration parameter of paging and/or the configuration parameter of random access of the source cell in the time period.

Specifically, in a cell reselection process of the terminal device, if both the indication information related to the paging process and the indication information related to the random access procedure in the first configuration information are true, the terminal device may receive paging or initiate random access in the time period. If the indication information related to the paging process in the first configuration information is true and the indication information related to the random access procedure is false, the terminal device can only receive paging but cannot initiate random access in the time period. Similarly, if the indication information related to the paging process in the first configuration information is false and the indication information related to the random access procedure is true, the terminal device can only initiate random access but cannot receive paging in the time period.

With reference to the first aspect, in some implementations of the first aspect, the first configuration information includes a configuration parameter of paging of the target cell that is different from that of the source cell, and/or a configuration parameter of random access of the target cell that is different from that of the source cell; and based on the first configuration information, receiving paging of the terminal device in the target cell and/or initiating random access of the terminal device in the target cell include/includes: based on the first configuration information of the target cell and another configuration parameter of paging and/or another configuration parameter of random access of the source cell other than the configuration parameter included in the first configuration information, receiving paging of the terminal device in the target cell and/or initiating random access of the terminal device in the target cell.

Specifically, the first configuration information may be a configuration parameter related to the paging process and/or a configuration parameter related to the random access procedure. In other words, the terminal device receives the configuration parameter related to the paging process and/or the configuration parameter related to the random access procedure from the network device. The first configuration information may include a parameter of the source cell that is different from that of the target cell. For example, if a paging period of the source cell is the same as that of the target cell but a paging channel configuration of the source cell is different from that of the target cell, the first configuration information received by the terminal device may include only the paging channel configuration, and the terminal device may consider by default that the paging period is the same as that of the source cell in the time period. In this way, a length of content included in the first configuration information can be reduced, thereby improving a transmission rate and improving data stability.

With reference to the first aspect, in some implementations of the first aspect, the first configuration information includes the configuration parameter of paging and/or the configuration parameter of random access of the target cell.

With reference to the first aspect, in some implementations of the first aspect, receiving the first configuration information sent by the network device includes: receiving neighboring cell list information sent by the network device, where the neighboring cell list information includes neighboring cell information of a plurality of cells, neighboring cell information of each of the plurality of cells includes a configuration parameter used to configure paging and/or a configuration parameter used to configure random access of the terminal device in each cell, and the plurality of cells include the target cell.

Specifically, the first configuration information may be included in the neighboring cell list information. For example, configuration information of paging and/or configuration information of random access of each cell in the first configuration information may be set in neighboring cell information of each cell in the neighboring cell list information. The network device may send the first configuration information by sending the neighboring cell list information to the terminal device.

With reference to the first aspect, in some implementations of the first aspect, the first configuration information is set in a parameter list of any one of the following neighboring cell information: NTN-NeighCellConfig-r17 in a SIB19 message of the target cell, IntraFreqNeighCellInfo in a SIB3 message of the target cell, and InterFreqNeighCellInfo in a SIB4 message of the target cell.

With reference to the first aspect, in some implementations of the first aspect, receiving the neighboring cell list information sent by the network device includes: receiving the neighboring cell information of the plurality of cells through one transmission beam; or receiving the neighboring cell information of the plurality of cells through a plurality of transmission beams, where each of the plurality of transmission beams is used to notify neighboring cell information of at least one of the plurality of cells.

Optionally, when the terminal receives the neighboring cell information of the plurality of cells through the plurality of transmission beams, neighboring cell information of different neighboring cells may be related to information like locations of the transmission beams. In other words, a correspondence between transmission beams and different cells may be determined based on locations of the transmission beams.

With reference to the first aspect, in some implementations of the first aspect, the method is applied to a non-terrestrial network (non-terrestrial network, NTN) scenario, for example, a transparent forwarding scenario and/or a regeneration mode scenario of satellite communication.

Specifically, the cell reselection process may be triggered by movement of a satellite in the NTN scenario. In the transparent forwarding scenario of satellite communication, a satellite only performs a frequency conversion and forwarding function. In the regeneration mode scenario of satellite communication, a satellite may include a network device, for example, a base station or a distributed unit.

According to a second aspect, a communication method is provided. The method is applied to a terminal device. For example, the method may be performed by the terminal device, or may be performed by a module (for example, a chip or a circuit) in the terminal device, or may be performed by a logical node, a logical module, or software that can implement all or some functions of the terminal device. This is not limited in this application.

The method includes: receiving second configuration information sent by a network device, where the second configuration information indicates N cells whose SIB1 messages need to be searched for when the terminal device performs cell reselection; and searching, for the SIB1 messages of the N cells based on the second configuration information, K cells adjacent to a source cell on which the terminal device currently camps, where N is a positive integer, and K is a positive integer greater than N.

It should be understood that, in a cell reselection process in the second aspect, after triggering a cell reselection condition, the terminal device measures an SSB message of a neighboring cell and simultaneously measures a SIB1 message of the neighboring cell, and then retrieves a target cell according to a cell reselection rule and camps on the target cell. In the foregoing cell reselection process, when there are a large quantity of neighboring cells, power consumption overheads of the terminal device are high, and a search period of the SIB1 message is long, thereby reducing user experience of the terminal device.

Specifically, in the communication method shown in the second aspect, the second configuration information indicates some of the plurality of neighboring cells, and the SIB1 messages of the some neighboring cells need to be searched for. In other words, the second configuration information includes the neighboring cells that have been filtered out and whose SIB1 messages need to be searched for. Therefore, the terminal device only needs to search for the SIB1 messages of the neighboring cells indicated in the second configuration information, and does not need to search for SIB1 messages of all neighboring cells.

According to the foregoing method, in the cell reselection process, a quantity of SIB1 messages that the terminal device needs to search for is reduced. In this way, power consumption overheads of the terminal device are reduced, and a period in which the SIB1 messages are searched for is reduced, thereby improving user service experience of the terminal device during cell reselection.

With reference to the second aspect, in some implementations of the second aspect, the second configuration information is determined based on prior information, and the prior information indicates a probability that a SIB1 message of each of the K cells needs to be searched for.

With reference to the second aspect, in some implementations of the second aspect, the prior information is determined based on an orbit of a satellite corresponding to each of the K cells and an orbit of a satellite corresponding to the source cell, or is determined based on a distance between a satellite corresponding to each of the K cells and a satellite corresponding to the source cell.

With reference to the second aspect, in some implementations of the second aspect, receiving the second configuration information sent by the network device includes: receiving neighboring cell list information sent by the network device, where the neighboring cell list information includes neighboring cell information of the K cells, and neighboring cell information of the N cells includes indication information indicating that the SIB1 messages need to be searched for.

Specifically, the second configuration information may be included in the neighboring cell list information. For example, a new indication parameter may be added to the neighboring cell list information, to indicate whether a SIB1 message of each of the K cells needs to be searched for. For example, if a value of an indication parameter of a cell is true, it indicates that a SIB1 message of the cell needs to be searched for. Alternatively, a new cell list or configuration file may be added to the neighboring cell list information, to display only a cell whose SIB1 message needs to be searched for.

With reference to the second aspect, in some implementations of the second aspect, the method is applied to a non-terrestrial network (non-terrestrial network, NTN) scenario, especially a transparent forwarding scenario and/or a regeneration mode scenario of satellite communication.

With reference to the second aspect, in some implementations of the second aspect, the second configuration information is set in a parameter list of any one of the following neighboring cell information: NTN-NeighCellConfig-r17 in SIB19 information, IntraFreqNeighCellInfo in SIB3 information, and InterFreqNeighCellInfo in SIB4 information.

According to a third aspect, a communication method is provided. The method is applied to a network device, and may be performed by the network device, or may be performed by a module (for example, a chip or a circuit) in the network device, or may be performed by a logical node, a logical module, or software that can implement all or some functions of the network device. This is not limited in this application.

The method includes: determining first configuration information, where the first configuration information is used to configure, after a terminal device camps on a target cell through a cell reselection process and before the terminal device retrieves a system information block SIB1 message of the target cell, a configuration parameter of paging and/or a configuration parameter of random access of the terminal device in the target cell, and the target cell is a neighboring cell of a source cell on which the terminal device currently camps; and sending the first configuration information to the terminal device.

According to the foregoing method, after the network device sends the first configuration information to the terminal device, the terminal device may receive paging or initiate access in a time period after the terminal device camps on the target cell and before the terminal device retrieves the SIB1 message of the target cell. In this way, when a user uses the terminal device, a problem that the terminal device cannot receive paging or initiate access in some time periods due to cell reselection of the terminal device does not occur, thereby improving user service experience of the terminal device.

With reference to the third aspect, in some implementations of the third aspect, the first configuration information includes indication information indicating whether the configuration parameter of paging of the target cell is the same as that of the source cell, and/or whether the configuration parameter of random access of the target cell is the same as that of the source cell.

With reference to the third aspect, in some implementations of the third aspect, the first configuration information includes a configuration parameter of paging of the target cell that is different from that of the source cell, and/or a configuration parameter of random access of the target cell that is different from that of the source cell.

With reference to the third aspect, in some implementations of the third aspect, the first configuration information includes the configuration parameter of paging and/or the configuration parameter of random access of the target cell.

With reference to the third aspect, in some implementations of the third aspect, sending the first configuration information to the terminal device includes: sending neighboring cell list information to the terminal device, where the neighboring cell list information includes neighboring cell information of a plurality of cells, neighboring cell information of each of the plurality of cells includes a configuration parameter used to configure paging and/or a configuration parameter used to configure random access of the terminal device in each cell, and the plurality of cells include the target cell.

With reference to the third aspect, in some implementations of the third aspect, the first configuration information is set in a parameter list of any one of the following neighboring cell information: NTN-NeighCellConfig-r17 in a SIB19 message of the target cell, IntraFreqNeighCellInfo in a SIB3 message of the target cell, and InterFreqNeighCellInfo in a SIB4 message of the target cell.

With reference to the third aspect, in some implementations of the third aspect, the method is applied to a non-terrestrial network (non-terrestrial network, NTN) scenario, especially a transparent forwarding scenario and/or a regeneration mode scenario of satellite communication.

With reference to the third aspect, in some implementations of the third aspect, sending the neighboring cell list information to the terminal device includes: sending the neighboring cell list information to the terminal device through one transmission beam; or sending the neighboring cell list information to the terminal device through a plurality of transmission beams, where each of the plurality of transmission beams is used to notify neighboring cell information of at least one of the plurality of cells.

The communication method provided in the third aspect is steps on a network device side corresponding to the communication method shown in the first aspect. Therefore, for explanations and beneficial effects of related content of the communication method provided in the third aspect, refer to the communication method shown in the first aspect. Details are not described herein again.

According to a fourth aspect, a communication method is provided. The method is applied to a network device. The method may be performed by the network device, or may be performed by a module (for example, a chip or a circuit) in the network device, or may be performed by a logical node, a logical module, or software that can implement all or some functions of the network device. This is not limited in this application.

The method includes: determining second configuration information, where the second configuration information indicates, when a terminal device performs cell reselection, N cells whose SIB1 messages need to be searched for and that are in K cells adjacent to a source cell on which the terminal device currently camps, where N is a positive integer, and K is a positive integer greater than N; and sending the second configuration information to the terminal device.

According to the foregoing method, after the network device sends the second configuration information to the terminal device, a quantity of SIB1 messages that the terminal device needs to search for in a cell reselection process is reduced. Therefore, power consumption overheads of the terminal device are reduced, and a period for searching for the SIB1 messages is reduced.

With reference to the fourth aspect, in some implementations of the fourth aspect, determining the second configuration information includes: determining the second configuration information based on prior information, where the prior information indicates a probability that a SIB1 message of each of the K cells needs to be searched for.

Specifically, the prior information may be a ranking of the probabilities that the SIB1 messages of the K cells need to be searched for, or may be specific values that are of the probabilities of the K cells and that are indicated by the network device. Optionally, the network device may sort, into the second configuration information based on a preset probability threshold, a cell whose probability that a SIB1 message needs to be searched for is higher than a probability threshold.

With reference to the fourth aspect, in some implementations of the fourth aspect, before determining the second configuration information, the method further includes: determining the prior information based on an orbit of a satellite corresponding to each of the K cells and an orbit of a satellite corresponding to the source cell, or a distance between a satellite corresponding to each of the K cells and a satellite corresponding to the source cell.

For example, if a distance between a satellite corresponding to a neighboring cell and the satellite corresponding to the source cell is short, the network device may determine that a probability that a SIB1 message needs to be detected in the neighboring cell is high. If the distance between the satellite corresponding to the neighboring cell and the satellite corresponding to the source cell is long, the network device may determine that the probability that the SIB1 message needs to be detected in the neighboring cell is low. For another example, the network device may determine, based on a distance between an orbit of a satellite corresponding to a neighboring cell and an orbit of the satellite corresponding to the source cell, a probability that a SIB1 message needs to be detected in the neighboring cell.

With reference to the fourth aspect, in some implementations of the fourth aspect, sending the second configuration information to the terminal device includes: sending neighboring cell list information to the terminal device, where the neighboring cell list information includes neighboring cell information of the K cells, and neighboring cell information of the N cells includes indication information indicating that the SIB1 message needs to be searched for.

With reference to the fourth aspect, in some implementations of the fourth aspect, the second configuration information is set in a parameter list of any one of the following neighboring cell information: NTN-NeighCellConfig-r17 in SIB19 information, IntraFreqNeighCellInfo in SIB3 information, and InterFreqNeighCellInfo in SIB4 information.

With reference to the fourth aspect, in some implementations of the fourth aspect, the method is applied to a non-terrestrial network (non-terrestrial network, NTN) scenario, especially a transparent forwarding scenario and/or a regeneration mode scenario of satellite communication.

The communication method provided in the fourth aspect is steps on a network device side corresponding to the communication method shown in the second aspect. Therefore, for explanations and beneficial effects of related content of the communication method provided in the fourth aspect, refer to the communication method shown in the second aspect. Details are not described herein again.

According to a fifth aspect, a communication apparatus is provided. The apparatus includes: a transceiver unit, configured to receive first configuration information sent by a network device, where the first configuration information is used to configure a configuration parameter of paging and/or a configuration parameter of random access of the terminal device in a target cell, and the target cell is a neighboring cell of a source cell on which the terminal device currently camps;

and a processing unit, configured to: after the target cell is camped on through a cell reselection process and before a system information block SIB1 message of the target cell is retrieved, based on the first configuration information, receive paging of the terminal device in the target cell and/or initiate random access of the terminal device in the target cell.

With reference to the fifth aspect, in some implementations of the fifth aspect, the first configuration information includes indication information indicating whether the configuration parameter of paging of the target cell is the same as that of the source cell, and/or whether the configuration parameter of random access of the target cell is the same as that of the source cell; and when the configuration parameter of paging of the target cell is the same as that of the source cell, and/or the configuration parameter of random access of the target cell is the same as that of the source cell, the processing unit is specifically configured to: based on the configuration parameter of the paging process and/or the configuration parameter of random access of the source cell, receive paging of the terminal device in the target cell and/or initiate random access of the terminal device in the target cell.

With reference to the fifth aspect, in some implementations of the fifth aspect, the first configuration information includes a configuration parameter of paging of the target cell that is different from that of the source cell, and/or a configuration parameter of random access of the target cell that is different from that of the source cell; and the processing unit is specifically configured to: based on the first configuration information of the target cell and another configuration parameter of paging and/or another configuration parameter of random access of the source cell other than the configuration parameter included in the first configuration information, receive paging of the terminal device in the target cell and/or initiate random access of the terminal device in the target cell.

With reference to the fifth aspect, in some implementations of the fifth aspect, the first configuration information includes the configuration parameter of paging and/or the configuration parameter of random access of the target cell.

With reference to the fifth aspect, in some implementations of the fifth aspect, the transceiver unit is specifically configured to receive neighboring cell list information sent by the network device, where the neighboring cell list information includes neighboring cell information of a plurality of cells, neighboring cell information of each of the plurality of cells includes a configuration parameter used to configure paging and/or a configuration parameter used to configure random access of the terminal device in each cell, and the plurality of cells include the target cell.

With reference to the fifth aspect, in some implementations of the fifth aspect, the apparatus is applied to a non-terrestrial network (non-terrestrial network, NTN) scenario, especially a transparent forwarding scenario and/or a regeneration mode scenario of satellite communication.

With reference to the fifth aspect, in some implementations of the fifth aspect, the transceiver unit is specifically configured to receive the neighboring cell information of the plurality of cells through one transmission beam, or receive the neighboring cell information of the plurality of cells through a plurality of transmission beams, where each of the plurality of transmission beams is used to notify neighboring cell information of at least one of the plurality of cells.

For explanations and beneficial effect of related content of the communication apparatus provided in the fifth aspect, refer to the communication method shown in the first aspect. Details are not described herein again.

According to a sixth aspect, a communication apparatus is provided. The apparatus includes: a transceiver unit, configured to receive second configuration information sent by a network device, where the second configuration information indicates N cells whose SIB1 messages need to be searched for when a terminal device performs cell reselection; and a processing unit, configured to search, for the SIB1 messages in the N cells based on the second configuration information, K cells adjacent to a source cell on which the terminal device currently camps, where N is a positive integer, and K is a positive integer greater than N.

With reference to the sixth aspect, in some implementations of the sixth aspect, the second configuration information is determined based on prior information, and the prior information indicates a probability that a SIB1 message of each of the K cells needs to be searched for.

With reference to the sixth aspect, in some implementations of the sixth aspect, the prior information is determined based on an orbit of a satellite corresponding to each of the K cells and an orbit of a satellite corresponding to the source cell, or is determined based on a distance between a satellite corresponding to each of the K cells and a satellite corresponding to the source cell.

With reference to the sixth aspect, in some implementations of the sixth aspect, the transceiver unit is specifically configured to receive neighboring cell list information sent by the network device, where the neighboring cell list information includes neighboring cell information of the K cells, and neighboring cell information of the N cells includes indication information indicating that the SIB1 messages need to be searched for.

With reference to the sixth aspect, in some implementations of the sixth aspect, the apparatus is applied to a non-terrestrial network (non-terrestrial network, NTN) scenario, especially a transparent forwarding scenario and/or a regeneration mode scenario of satellite communication.

With reference to the sixth aspect, in some implementations of the sixth aspect, the second configuration information is set in a parameter list of any one of the following neighboring cell information: NTN-NeighCellConfig-r17 in SIB19 information, IntraFreqNeighCellInfo in SIB3 information, and InterFreqNeighCellInfo in SIB4 information.

For explanations and beneficial effect of related content of the communication apparatus provided in the sixth aspect, refer to the paging method shown in the second aspect. Details are not described herein again.

According to a seventh aspect, a communication apparatus is provided. The apparatus includes: a processing unit, configured to determine first configuration information, where the first configuration information is used to configure, after a terminal device camps on a target cell through a cell reselection process and before the terminal device retrieves a system information block SIB1 message of the target cell, a configuration parameter of paging and/or a configuration parameter of random access of the terminal device in the target cell, and the target cell is a neighboring cell of a source cell on which the terminal device currently camps; and a transceiver unit, configured to send the first configuration information to the terminal device.

With reference to the seventh aspect, in some implementations of the seventh aspect, the first configuration information includes indication information indicating whether the configuration parameter of paging of the target cell is the same as that of the source cell, and/or whether the configuration parameter of random access of the target cell is the same as that of the source cell.

With reference to the seventh aspect, in some implementations of the seventh aspect, the first configuration information includes a configuration parameter of paging of the target cell that is different from that of the source cell, and/or a configuration parameter of random access of the target cell that is different from that of the source cell.

With reference to the seventh aspect, in some implementations of the seventh aspect, the first configuration information includes the configuration parameter of paging and/or the configuration parameter of random access of the target cell.

With reference to the seventh aspect, in some implementations of the seventh aspect, the transceiver unit is specifically configured to send neighboring cell list information to the terminal device, where the neighboring cell list information includes neighboring cell information of a plurality of cells, neighboring cell information of each of the plurality of cells includes a configuration parameter used to configure paging and/or a configuration parameter used to configure random access of the terminal device in each cell, and the plurality of cells include the target cell.

With reference to the seventh aspect, in some implementations of the seventh aspect, the first configuration information is set in a parameter list of any one of the following neighboring cell information: NTN-NeighCellConfig-r17 in a SIB19 message of the target cell, IntraFreqNeighCellInfo in a SIB3 message of the target cell, and InterFreqNeighCellInfo in a SIB4 message of the target cell.

With reference to the seventh aspect, in some implementations of the seventh aspect, the apparatus is applied to a non-terrestrial network (non-terrestrial network, NTN) scenario, especially a transparent forwarding scenario and/or a regeneration mode scenario of satellite communication.

With reference to the seventh aspect, in some implementations of the seventh aspect, the transceiver unit is specifically configured to: send the neighboring cell list information to the terminal device through one transmission beam; or send the neighboring cell list information to the terminal device through a plurality of transmission beams, where each of the plurality of transmission beams is used to notify neighboring cell information of at least one of the plurality of cells.

For explanations and beneficial effect of related content of the communication apparatus provided in the seventh aspect, refer to the paging method shown in the third aspect. Details are not described herein again.

According to an eighth aspect, a communication apparatus is provided. The apparatus includes: a processing unit, configured to determine second configuration information, where the second configuration information indicates, when a terminal device performs cell reselection, N cells whose SIB1 messages need to be searched for and that are in K cells adjacent to a source cell on which the terminal device currently camps, where N is a positive integer, and K is a positive integer greater than N; and a transceiver unit, configured to send the second configuration information to the terminal device.

With reference to the eighth aspect, in some implementations of the eighth aspect, the processing unit is specifically configured to determine the second configuration information based on prior information, where the prior information indicates a probability that a SIB1 message of each of the K cells needs to be searched for.

With reference to the eighth aspect, in some implementations of the eighth aspect, before the processing module determines the second configuration information, the processing module is further configured to determine the prior information based on an orbit of a satellite corresponding to each of the K cells and an orbit of a satellite corresponding to the source cell, or a distance between a satellite corresponding to each of the K cells and a satellite corresponding to the source cell.

With reference to the eighth aspect, in some implementations of the eighth aspect, the transceiver unit is specifically configured to send neighboring cell list information to the terminal device, where the neighboring cell list information includes neighboring cell information of the K cells, and neighboring cell information of the N cells includes indication information indicating that the SIB1 message needs to be searched for.

With reference to the eighth aspect, in some implementations of the eighth aspect, the second configuration information is set in a parameter list of any one of the following neighboring cell information: NTN-NeighCellConfig-r17 in SIB19 information, IntraFreqNeighCellInfo in SIB3 information, and InterFreqNeighCellInfo in SIB4 information.

With reference to the eighth aspect, in some implementations of the eighth aspect, the apparatus is applied to a non-terrestrial network (non-terrestrial network, NTN) scenario, especially a transparent forwarding scenario and/or a regeneration mode scenario of satellite communication.

For explanations and beneficial effects of related content of the paging apparatus provided in the eighth aspect, refer to the paging method shown in the fourth aspect. Details are not described herein again.

According to a ninth aspect, a communication apparatus is provided, including a processor. The processor is configured to: by executing a computer program or instructions or through a logic circuit, enable the communication apparatus to perform the method according to any one of the first aspect and the possible implementations of the first aspect, or enable the communication apparatus to perform the method according to any one of the second aspect and the possible implementations of the second aspect, or enable the communication apparatus to perform the method according to any one of the third aspect and the possible implementations of the third aspect, or enable the communication apparatus to perform the method according to any one of the fourth aspect and the possible implementations of the fourth aspect.

In a possible implementation, the communication apparatus further includes a memory, configured to store the computer program or the instructions.

In a possible implementation, the communication apparatus further includes a communication interface, configured to input and/or output a signal.

According to a tenth aspect, a communication apparatus is provided, including a logic circuit and an input/output interface. The input/output interface is configured to input and/or output a signal. The logic circuit is configured to perform the method according to any one of the first aspect and the possible implementations of the first aspect, or the logic circuit is configured to perform the method according to any one of the second aspect and the possible implementations of the second aspect, or the logic circuit is configured to perform the method according to any one of the third aspect and the possible implementations of the third aspect, or the logic circuit is configured to perform the method according to any one of the fourth aspect and the possible implementations of the fourth aspect.

According to an eleventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a twelfth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a thirteenth aspect, a communication system is provided. The communication system includes the first terminal device and the network device. The first terminal device is configured to perform the method according to any one of the first aspect, the second aspect, and the possible implementations of the first aspect and the second aspect, and the network device is configured to perform the method according to any one of the third aspect, the fourth aspect, and the possible implementations of the third aspect and the fourth aspect.

For descriptions of beneficial effects of the fifth aspect to the thirteenth aspect, refer to the descriptions of the first aspect to the fourth aspect.

## BRIEF DESCRIPTION OF DRAWINGS

FIG. 1 is a diagram of an example of a communication system applicable to an embodiment of this application;

FIG. 2 is a diagram of a satellite communication system applicable to an embodiment of this application;

FIG. 3 is a diagram of a cell reselection process applicable to an embodiment of this application;

FIG. 4 is a diagram of another cell reselection process applicable to an embodiment of this application;

FIG. 5 is a schematic flowchart of a communication method applicable to an embodiment of this application;

FIG. 6 is a diagram of first configuration information applicable to an embodiment of this application;

FIG. 7 is another diagram of first configuration information applicable to an embodiment of this application;

FIG. 8 is still another diagram of first configuration information applicable to an embodiment of this application;

FIG. 9A to FIG. 9C are diagrams of neighboring cell list information applicable to an embodiment of this application;

FIG. 10A and FIG. 10B are diagrams of a correspondence between a delivery beam and neighboring cell information applicable to an embodiment of this application;

FIG. 11 is a schematic flowchart of another communication method applicable to an embodiment of this application;

FIG. 12A and FIG. 12B are other diagrams of neighboring cell list information applicable to an embodiment of this application;

FIG. 13 is a block diagram of an example of a communication apparatus applicable to an embodiment of this application;

FIG. 14 is a block diagram of another example of a communication apparatus applicable to an embodiment of this application; and

FIG. 15 is a block diagram of another example of a communication apparatus applicable to an embodiment of this application.

## DESCRIPTION OF EMBODIMENTS

The following describes technical solutions of this application with reference to accompanying drawings.

For ease of understanding embodiments of this application, the following descriptions are provided first.

1. In this application, unless otherwise specified, "a plurality of" means two or more.

2. In this application, unless otherwise specified or there is a logic conflict, terms and/or descriptions in different embodiments are consistent and may be mutually referenced, and technical features in different embodiments may be combined based on an internal logic relationship thereof, to form a new embodiment.

3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.

In addition, any embodiment or design solution described as an "example" or "for example" in this application should not be explained as being more preferred or having more advantages than another embodiment or design solution. Exactly, use of the word such as "example" or "for example" is intended to present a related concept in a specific manner for ease of understanding.

4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

5. In this application, the term "preset" may include predefinition, for example, definition in a protocol. "Predefinition" may be implemented by pre-storing corresponding code or a corresponding table in a device, or may be implemented in another manner of indicating related information. A specific implementation of "predefinition" is not limited in this application.

6. The term "store" or "save" in this application may mean storing in one or more memories. The one or more memories may be separately disposed, or may be integrated into an encoder, a decoder, a processor, or a communication apparatus. Alternatively, the one or more memories may be partially disposed separately, and partially integrated into a decoder, a processor, or a communication apparatus. A type of the memory may be a storage medium in any form. This is not limited.

7. In this application, unless otherwise specified, "/" represents an "or" relationship between associated objects. For example, A/B may represent A or B. "And/or" in this application describes only an association relationship for describing associated objects and represents that three relationships may exist. For example, A and/or B may represent the following three cases: Only A exists, both A and B exist, and only B exists, where A and B may be singular or plural.

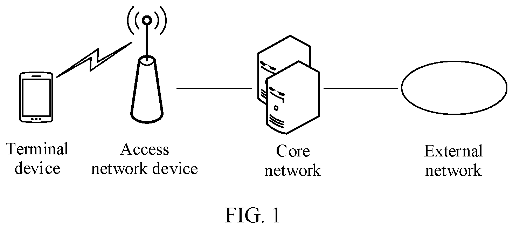

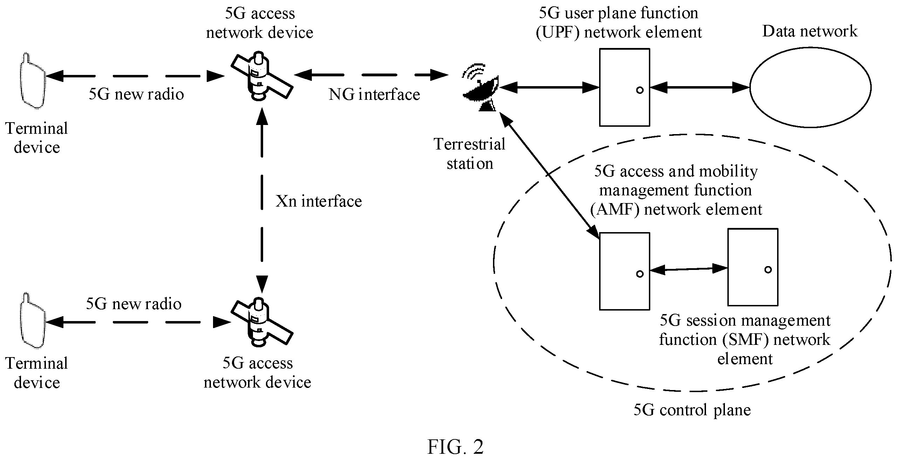

First, with reference to FIG. 1 and FIG. 2, a communication system to which embodiments of this application are applicable is described.

The technical solutions provided in this application are applicable to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunication system (universal mobile telecommunication system, UMTS). The technical solutions provided in this application may be further applied to a future communication system, for example, a 6th generation (6th generation, 6G) mobile communication system. The technical solutions provided in this application may be further applied to a device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, a non-terrestrial network (non-terrestrial network, NTN) communication system, or another communication system.

In addition, a specific structure of an execution body of a provided method is not specifically limited in embodiments of this application, provided that a program that records code of the method provided in the embodiments of this application can be run to perform communication according to the method provided in the embodiments of this application. For example, the method provided in the embodiments of this application may be performed by a terminal or a network device, or a functional module that can invoke a program in UE or the network device and execute the program.

In an example, FIG. 1 is a diagram of an architecture of a communication system. For example, the architecture may include a terminal device, an access network (access network, AN) device, a core network (core network, CN), an external network, and the like. The external network may be a data network (data network, DN), and the access network device is a radio access network (radio access network, RAN) device provided in this application.

The terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in this application may alternatively be a handheld device, a vehicle-mounted device, or the like that has a wireless connection function. Currently, examples of some terminal devices are a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a wearable device, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

It should be noted that the terminal device and the access network device may communicate with each other by using a specific air interface technology (for example, but not limited to an NR or LTE technology). The terminal devices may also communicate with each other by using a specific air interface technology (for example, but not limited to an NR or LTE technology).

In embodiments of this application, an apparatus configured to implement a function of the terminal device may be a terminal device, or may be an apparatus, for example, a chip system or a chip, that can support the terminal device in implementing the function. The apparatus may be mounted in the terminal device. In this embodiment of this application, the chip system may include a chip, or may include a chip and another discrete component.

The access network device may also be referred to as a RAN node, a RAN device, or the like. The RAN may provide authorized users in a specific region with a function of accessing to a communication network. Specifically, the access network device may include a wireless network device in a 3rd generation partnership project (3rd generation partnership project, 3GPP) network, or may include an access point in a non-3GPP (non-3GPP) network. For ease of description, an access network (access network, AN) device is used in the following.

The access network device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology refers to an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), a code division multiple access (code division multiple access, CDMA), and the like. The access network device may allow the terminal device and a 3GPP core network to be interconnected and interworked by using the non-3GPP technology.

The access network device can be responsible for functions such as radio resource management, quality of service (quality of service, QoS) management, and data compression and encryption on an air interface side. The access network device provides an access service for the terminal device, and then completes forwarding of a control signal and user data between the terminal device and the core network.

For example, the access network device may include, but is not limited to, a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next generation 6G communication system. A specific technology used by the AN device and a specific device form of the AN device are not limited in embodiments of this application.

The core network is responsible for services such as user access control, mobility management, session management, user authentication, and charging. The core network includes a plurality of functional units, and may be divided into a control plane functional entity and a data plane functional entity. An access and mobility management function (access and mobility management function, AMF) network element is responsible for user access management and control, user authentication, mobility management, and the like. A user plane function (user plane function, UPF) network element is responsible for managing functions such as user plane data transmission and traffic statistics. A session management function (session management function, SMF) network element is mainly responsible for a control plane function of user session management.

In this embodiment of this application, when a distance between the access network device and the terminal device is long, an application scenario of the communication system shown in FIG. 1 may be the NTN communication system, for example, a satellite communication network, a high altitude platform station (high altitude platform station, HAPS), or an air-to-ground network. For example, the satellite communication system includes a satellite base station, and the satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite. The NTN communication system may be applied to a special communication scenario or a scenario in which a terrestrial cellular network cannot be completely covered, for example, a gobi, a desert, an ocean, or a remote mountainous area. Alternatively, the NTN communication system may be applied to a scenario in which a terrestrial cellular network is damaged after a natural disaster that damages terrestrial infrastructure, such as a flood or an earthquake, to provide reliable network services for terminal users. The NTN communication system may be independently deployed, or may be used as a supplement to a terrestrial network.

For example, FIG. 2 is a diagram of a satellite communication system applicable to an embodiment of this application. A 5G network is used as an example. A ground terminal device accesses a network by using a 5G new radio, a 5G access network device is deployed on a satellite, and is connected to a ground core network via a radio link. In addition, there is a radio link between satellites, to implement signaling interaction and user data transmission between 5G access network devices. Network elements and interfaces between the network elements in FIG. 2 are described as follows.

5G new radio is a radio link between a terminal device and a 5G access network device.

The terminal device is a mobile device that supports the 5G new radio, for example, a mobile terminal device like a mobile phone or a pad. The terminal device may access a satellite network through the air interface and initiate services such as a call and internet access. For details, refer to the foregoing descriptions of the terminal device.

The 5G access network device mainly provides a radio access service, schedules a radio resource for an access terminal, and provides a reliable wireless transmission protocol and data encryption protocol and the like; and is, for example, a base station.

The 5G core network provides services such as user access control, mobility management, session management, user authentication, and charging. The 5G core network includes a plurality of functional units, and may be divided into a control plane functional entity and a data plane functional entity. The AMF network element is responsible for user access management and control, user authentication, mobility management, and the like. The UPF network element is responsible for managing functions such as user plane data transmission and traffic statistics collection. The SMF network element is mainly responsible for a control plane function of session management of the terminal device.

A terrestrial station is responsible for forwarding signaling and service data between a 5G access network device and a 5G core network.

An Xn interface is an interface between 5G access network devices, and is mainly used for signaling interaction for handover or the like.

An NG interface is an interface between the 5G access network device and the 5G core network, and is mainly for exchanging signaling of a non-access stratum (non-access stratum, NAS) of the core network and service data of a user.

Optionally, the satellite communication may include a transparent forwarding scenario or a regeneration mode scenario. For example, two 5G access network devices shown in FIG. 2 may be in the transparent forwarding scenario or the regeneration mode scenario. In the transparent forwarding scenario, a satellite serving as the 5G access network device only performs a frequency conversion and forwarding function. In the regeneration mode scenario, the satellite serving as the 5G access network device may include a gNB device, a DU, or the like.

It should be noted that the technical solutions of this application may be further applicable to another NTN scenario in which the access network device is far away from the terminal device. A satellite communication scenario shown in FIG. 2 is not limited in this application.

The following describes an existing cell reselection process and an existing technical problem.

The cell reselection process is different from a cell selection process. During cell selection, when a terminal device is powered on or a radio link failure occurs, the terminal device performs a cell search process and selects a suitable cell as soon as possible for camping. In the cell reselection process, after a terminal device camps on a cell, when the terminal device moves or a satellite in an NTN communication system moves, the terminal device may need to switch to another cell with a higher priority or better signal for camping. In other words, cell selection is a process in which the terminal device finds a suitable cell as soon as possible, and cell reselection is a process in which the terminal device selects a more suitable cell. For example, if a cell diameter is 50 km and a moving speed of a low earth orbit satellite is 7.56 km/s, the terminal device needs to complete cell reselection once about every 6s due to movement of the satellite. A cell on which the terminal device camps is a serving cell that is currently being used by the terminal device, that is, a cell in which the terminal device establishes a connection to a network and performs data transmission.

For example, the cell selection process may be the following steps: In a cell search process, the terminal device reads system information of the cell, and obtains parameters such as $Q_{rxlevmeas}$, $Q_{rxlevmin}$, and $Q_{rxlevminoffset}$. $Q_{rxlevmeas}$ refers to a received signal strength value obtained by the terminal device through measurement, and the value is a measured reference signal received power (reference signal received power, RSRP) (dBm). $Q_{rxlevmin}$ refers to a minimum received signal strength value required by the cell, and the value (dBm) may be indicated by q-RxLevMin in a SIB1 message of the cell. $Q_{rxlevminOffset}$ is valid only when the terminal device normally camps on a virtual private mobile network (virtual private mobile network, VPMN) and periodically searches for a high-priority public land mobile network (public land mobile network, PLMN) for cell selection evaluation, and the parameter can be used to offset $Q_{rxlevmin}$.

After obtaining the foregoing parameters, the terminal device may evaluate, according to a criterion S, whether the cell is a suitable cell. Once a suitable cell (that is, a cell that meets the criterion S) is found, it may be considered that the terminal device completes the cell selection process. If the cell is not a suitable cell, the terminal device continues to search until the terminal device finds the suitable cell and camps on the cell.

That the criterion S is met means that Srxlev (S value) > 0. In other words, if an S value of the cell is greater than 0, it indicates that the cell is a suitable cell (a cell suitable for camping). Srxlev refers to a level value (dB) obtained through calculation in the cell selection/reselection process. A specific calculation formula of Srxlev is as follows:

$$Srxlev = Q_{rxlevmeas} - (Q_{rxlevmin} - Q_{rxlevminoffset}) - P_{compensation}$$

$P_{compensation}$ is max (PEMAX-PUMAX, 0) (dB), where PEMAX is a maximum allowed transmit power (dBm) set by the system when the terminal device accesses the cell, and PUMAX is a maximum output power or a maximum uplink transmit power (dBm) specified based on a level of the terminal device.

For example, the cell reselection process may be the following steps: The terminal device measures signal quality levels of neighboring cells (namely, neighboring cells of a source cell currently accessed by the terminal device). For different neighboring cells, the terminal device may perform evaluation according to different reselection rules, and finally reselect a cell. When performing measurement and cell reselection, the terminal device may use priority information of neighboring frequencies. A priority of each frequency is configured, so that it may be more convenient to guide the terminal device to reselect a cell with a high priority for camping, thereby balancing network load, improving resource utilization, and ensuring signal quality of the terminal device. The measurement criteria are as follows:

For serving cells whose priorities are higher than a priority of a frequency layer or a system of the source cell on which the terminal device currently camps, the terminal device always measures signal quality levels of these serving cells. If Srxlev of a neighboring cell is less than or equal to Sintrasearch (an intra-frequency measurement start threshold), the terminal device starts measurement on an intra-frequency cell. If Srxlev of the neighboring cell is less than or equal to Snonintrasearch (an inter-frequency measurement start threshold) or Snonintrasearch is not configured, the UE starts measurement of frequencies or systems of a same priority or lower priority.

After the foregoing measurement process, the terminal device determines whether to reselect to a new cell. Reselection criteria are as follows:

a reselection criterion for a high-priority frequency or system: Srxlev of a target frequency cell > Threshx, high (a decision threshold of a high-priority cell), and time set by a cell reselection timer (TreselectionRAT) is continuous;

a reselection criterion for a low-priority frequency or system: Srxlev of a serving cell < Threshserving, low (a decision threshold of a low-priority cell), Srxlev of a target frequency cell > Threshx, low, and time set by a cell reselection timer (TreselectionRAT) is continuous; and

a reselection criterion of a same-priority frequency or system: cell reselection of a same-priority frequency cell is based on a ranking rule of intra-frequency cell reselection. The intra-frequency cell reselection criterion (Ranking) is defined as follows:

$$R_s = Q_{meas,s} + Qhyst_s$$

$$R_n = Q_{meas,s} - Q_{offset}$$

Herein, $R_s$ is a ranking value of a current serving cell, $R_n$ is a ranking value of a neighboring cell, $Qhyst_s$ is a hysteresis value, and is used to prevent ping-pong reselection, and $Q_{meas}$ is a received signal strength value of the cell that is obtained by the UE through measurement. For an intra-frequency, a value of $Q_{offset}$ is $Q_{offsets,n}$. For an inter-frequency, a value of $Q_{offset}$ is $Q_{offsets,n} + Q_{offsetfrequency}$.

The terminal device sorts ranking values of all cells that meet the foregoing criterion S, and reselects a cell with the best ranking. The foregoing required configuration parameters of the currently camped cell and the neighboring cell are broadcast in a system message of the cell on which the terminal device currently camps, so that the terminal device can calculate parameters such as $R_s$ and $R_n$.

At present, after triggering a cell reselection condition, the terminal device detects a synchronization signal and PBCH block (synchronization signal and PBCH block, SSB) message of a neighboring cell, then detects a system information block 1 (system information block 1, SIB1) message of the neighboring cell, finds a target cell according to a cell reselection rule, and camps on the target cell. The SIB1 message is cell-specific information in an LTE system, and carries key information required by the terminal device to access a cell, including a cell ID, an operator ID (that is, a PLMN) to which the cell belongs, a flag indicating whether the cell is barred (cellBarred, where this parameter is used to notify the terminal device whether the current cell can be accessed), a paging parameter, a random access parameter, and the like. In the cell reselection process, the terminal device needs to search for and decode SIB1 information in a neighboring cell announcement message, to evaluate neighboring cell quality and receive related information. If the terminal device camps on a VPLMN, the terminal device further needs to periodically search for a $Q_{rxlevmin}$ offset notified by using signaling of Srxlev evaluated by a high-priority PLMN. These operations can ensure that the terminal device can obtain related information in time, and perform cell reselection when necessary, to maintain stability and reliability of communication.

However, in the foregoing cell reselection process in which the target cell is camped on or the SIB1 message is detected, user service experience of the terminal device is poor.

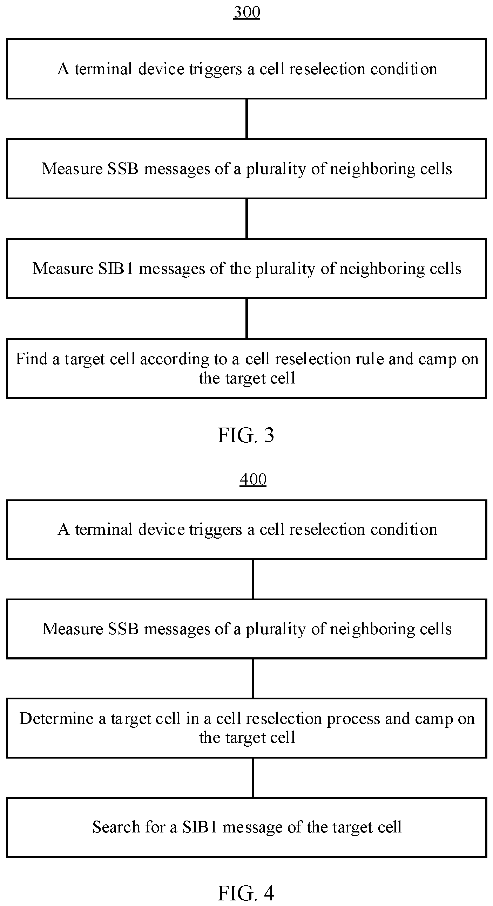

For example, FIG. 3 is a diagram of a cell reselection process 300. As shown in FIG. 3, after triggering a cell reselection condition, the terminal device measures SSB messages of a plurality of neighboring cells, may simultaneously measure SIB1 messages of the plurality of neighboring cells, then finds a target cell according to a cell reselection rule, and camps on the target cell. However, in the foregoing cell reselection process, when there are a large quantity of neighboring cells, the terminal device needs to search for SIB1 messages of the large quantity of neighboring cells, and functional overheads of the terminal device are high. In addition, in a scenario of an NTN communication system, because different neighboring cells may correspond to different satellites and radio environments, frequency band allocation, device performance, configuration parameters, or other factors, time-frequency offsets between the different neighboring cells are large, and SIB1 messages of the different neighboring cells may interfere with each other. As a result, the terminal device cannot correctly decode the SIB1 messages. To separate SIB1 information of different cells in terms of time and frequency to avoid mutual interference, the terminal device needs to search for SIB1 messages of cells in a time division manner. For example, the terminal device may complete measurement of SIB1 messages of five neighboring cells by searching for at least five periods. In other words, a search period for searching for the SIB1 messages by the terminal device is long. Therefore, due to high power consumption overheads and a long search period of the terminal device, user service experience of the terminal device is poor.

For example, FIG. 4 is a diagram of another cell reselection process 400. As shown in FIG. 4, at present, after detecting SSB messages of neighboring cells, a terminal device may determine a target cell in the cell reselection process based on a detection result of the SSB messages of the neighboring cells (for example, the received signal strength value or the maximum output power mentioned above). In other words, the target cell is a most appropriate cell selected by the terminal device from the plurality of neighboring cells. Then, after camping on the target cell, the terminal device searches for a SIB1 message of the target cell. In this way, the terminal device needs to measure a SIB1 message of only one target cell in one period. In other words, a small quantity of SIB1 messages need to be searched for in the cell reselection process, thereby reducing power consumption overheads of the terminal device and reducing a search period of the SIB1 message.

However, in a time period after the terminal device camps on the target cell and before the terminal device retrieves the SIB1 message of the target cell, the terminal device has no parameter configuration of paging and parameter configuration of random access of the target cell, and therefore cannot receive paging or initiate random access. In other words, in the steps shown in FIG. 4, before the terminal device camps on the target cell, the terminal device may use a parameter configuration of paging or a parameter configuration of random access of a source cell. After the terminal device retrieves the SIB1 message of the target cell, the terminal device may use the parameter configuration of paging or the parameter configuration of random access of the target cell in the SIB1 message. However, in an intermediate time period, the terminal device have no available parameter configuration of paging and parameter configuration of random access. In this way, when a user uses the terminal device, a problem that the terminal device cannot receive paging or cannot initiate random access in some time periods due to cell reselection of the terminal device occurs, thereby affecting user experience.

To resolve the foregoing technical problem, this application provides a communication method 500 and a communication method 1100, to improve user service experience of a terminal device in a cell reselection process.

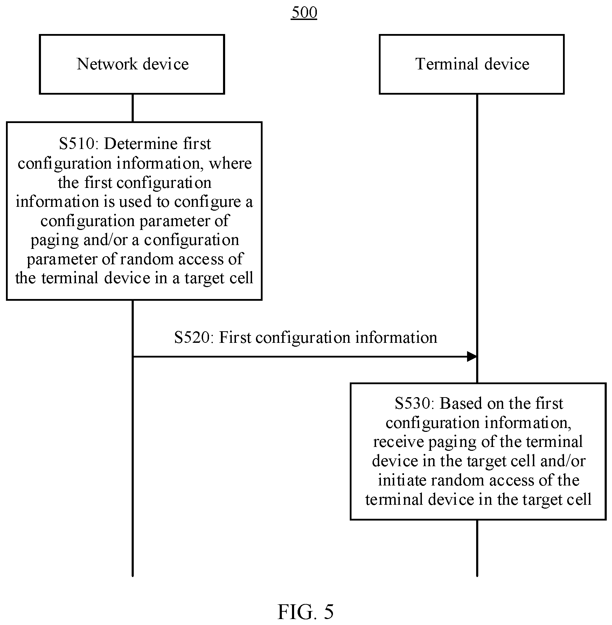

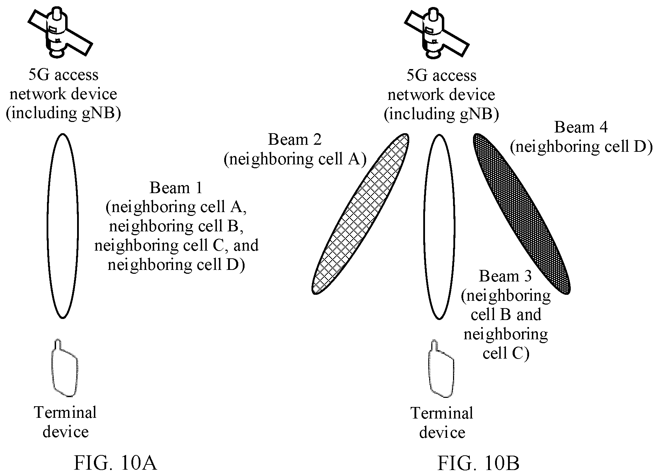

The following describes the communication method 500 provided in embodiments of this application with reference to FIG. 5 to FIG. 10A and FIG. 10B. The communication method 500 may be used to resolve the foregoing problem that the terminal device cannot receive paging or cannot initiate random access in the cell reselection process.

FIG. 5 is a schematic interaction flowchart of a communication method 500 according to an embodiment of this application. The method shown in FIG. 5 may be performed by a terminal device and a network device, or may be performed by a module and/or a component (for example, a chip or an integrated circuit) that is installed in a terminal device and a network device and that has a corresponding function. This is not limited in this application. The network device in the following may be the foregoing access network device. The following uses the terminal device and the network device as an example for description. As shown in FIG. 5, the method 500 includes the following steps.

Step S510: A network device determines first configuration information, where the first configuration information is used to configure a configuration parameter of paging and/or a configuration parameter of random access of the terminal device in a target cell.

Specifically, the first configuration information may be indication information indicating a parameter configuration of paging and/or a parameter configuration of access, or may be a configuration parameter related to a paging process and/or a configuration parameter related to a random access procedure. For example, the configuration parameter of paging may include a paging cycle, a start location of a paging frame, a paging channel configuration, a number of paging occasions per paging frame (number of paging occasions per paging frame) (or a parameter ns), and the like. The configuration parameter of random access may include a time-frequency resource location of a random access occasion (RACH occasion, RO), a root sequence number of a preamble (preamble), and the like. In some other embodiments of this application, the configuration parameter of random access may further include a configuration parameter of two-step random access or a configuration parameter of dedicated random access. For example, the configuration parameter of the two-step random access may include a physical random access channel (physical random access channel, PRACH) type, and the like. The configuration parameter of the dedicated random access may include a quantity of non-dedicated random access preambles, a configuration of a preamble group, and the like.

S520: The network device sends the first configuration information to the terminal device.

Optionally, the network device may directly send the first configuration information to the terminal device, or may send the first configuration information by sending neighboring cell list information to the terminal device. In other words, content of the first configuration information may be included in the neighboring cell list information sent by the network device. For example, the first configuration information may be included in a parameter list of neighboring cell information like NTN-NeighCellConfig-r17 in a SIB19 message, IntraFreqNeighCellInfo in a SIB3 message, InterFreqNeighCellInfo in a SIB4 message, or the like.

Optionally, when the first configuration information is included in the neighboring cell list information, the network device may send, through one or more transmission beams, neighboring cell information of a plurality of cells included in the neighboring cell list information. For example, the network device may send the neighboring cell information of the plurality of cells through a plurality of transmission beams, where each transmission beam is used to notify neighboring cell information of at least one of the plurality of cells.

S530: After camping on the target cell through a cell reselection process and before retrieving a system information block SIB1 message of the target cell, based on the first configuration information, the terminal device receives paging of the terminal device in the target cell and/or initiates random access of the terminal device in the target cell.

According to the foregoing method, the terminal device may receive paging or initiate random access in a time period after camping on the target cell and before retrieving the SIB1 message of the target cell. In this way, when a user uses the terminal device, a problem that the terminal device cannot receive paging or initiate random access in some time periods due to cell reselection of the terminal device does not occur, thereby improving user service experience of the terminal device.

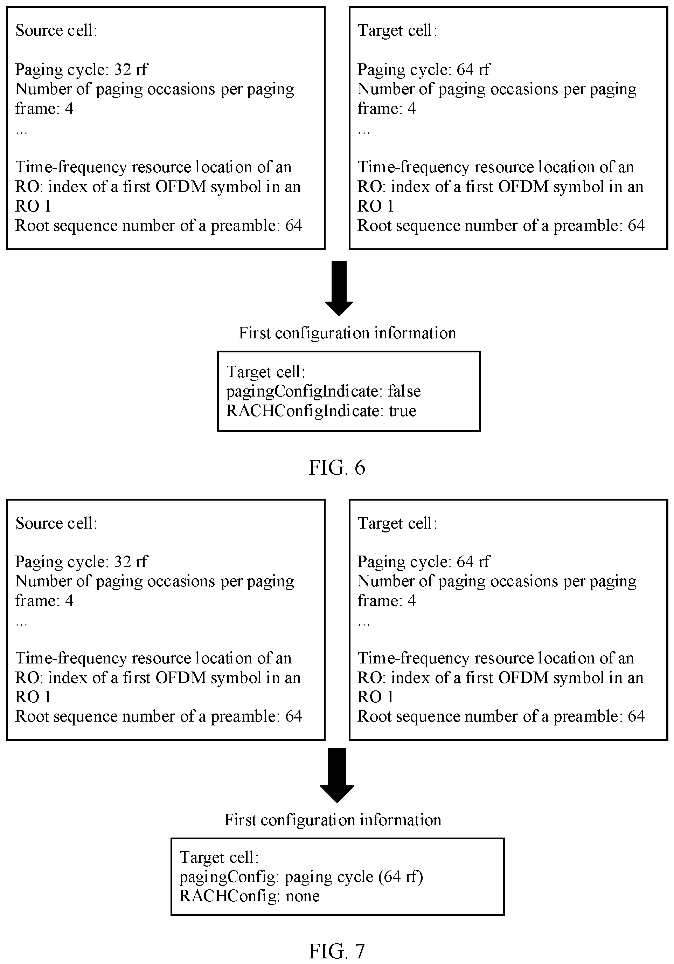

With reference to FIG. 6 to FIG. 8, the following describes an embodiment of the first configuration information in this application or an embodiment of step S510.

In some embodiments of this application, the first configuration information may include indication information indicating whether the configuration parameter of paging of the target cell is the same as that of the source cell, and/or whether the configuration parameter of random access of the target cell is the same as that of the source cell. Specifically, a value of the indication information in the first configuration information may be true or false. If the value is true, it indicates that the configuration parameter of paging of the target cell is the same as that of the source cell, and/or the configuration parameter of random access of the target cell is the same as that of the source cell. If the value is false, it indicates that the configuration parameter of paging of the target cell is different from that of the source cell, and/or the configuration parameter of random access of the target cell is different from that of the source cell.

In this way, when the value of the indication information is true, the terminal device may continue to use the configuration parameter of paging and/or the configuration parameter of random access of the source cell in the time period. In other words, when the configuration parameter of paging of the target cell is the same as that of the source cell, and/or the configuration parameter of random access of the target cell is the same as that of the source cell, based on the configuration parameter of the paging process and/or the configuration parameter of the random access of the source cell, the terminal device may receive paging of the terminal device in the target cell and/or initiate random access of the terminal device in the target cell.

Specifically, in a cell reselection process of the terminal device, if both the indication information related to the paging process and the indication information related to the random access procedure in the first configuration information are true, the terminal device may receive paging or initiate random access in the time period by using the configuration parameter of the source cell. If the indication information related to the paging process in the first configuration information is true and the indication information related to the random access procedure is false, the terminal device can only receive paging but cannot initiate random access in the time period. Similarly, if the indication information related to the paging process in the first configuration information is false and the indication information related to the random access procedure is true, the terminal device can only initiate random access but cannot receive paging in the time period.

FIG. 6 is a diagram of first configuration information in the foregoing embodiment. As shown in FIG. 6, in a configuration parameter of paging, a number of paging occasions per paging frame of a source cell is the same as that of a target cell, but a paging period of the source cell is different from that of the target cell. Therefore, a network device determines that a value of indication information pagingConfigIndicate related to a paging process in the first configuration information is false. In a configuration parameter of random access, all parameters (for example, a time-frequency resource location of an RO and a root sequence number of a preamble shown in FIG. 6) of the source cell are completely the same as those of the target cell. Therefore, the network device determines that a value of indication information RACHConfigIndicate related to a random access procedure in the first configuration information is true. In the case shown in FIG. 6, after receiving the first configuration information sent by the network device, the terminal device may initiate random access in the target cell but the terminal device cannot receive paging in the target cell in a time period based on the configuration parameter of random access of the source cell.

It should be noted that names of the indication information pagingConfigIndicate and RACHConfigIndicate shown in FIG. 6 are merely examples, and do not constitute a limitation on naming of the first configuration information. The same applies to naming of the first configuration information and the second configuration information in the following.

In some other embodiments of this application, the first configuration information may be a configuration parameter related to a paging process and/or a configuration parameter related to a random access procedure. For example, the first configuration information may include a configuration parameter related to a paging process and/or a configuration parameter related to a random access procedure of the target cell. To be specific, the network device directly sends the configuration parameter related to the paging process and/or the configuration parameter related to the random access procedure of the target cell to the terminal device, so that the terminal device may receive paging or initiate random access in the time period by directly using the received configuration parameter of the paging process and/or the received configuration parameter of the random access procedure of the target cell. For another example, the first configuration information may include a parameter of the source cell that is different from that of the target cell. For example, if the number of paging occasions per paging frame of the source cell is the same as that of the target cell, but the paging period of the source cell is different from that of the target cell, the network device may add only content of the paging period to the first configuration information, so that the terminal device considers by default that the number of paging occasions per paging frame of the target cell is the same as that of the source cell in the time period. In this way, a length of content included in the first configuration information can be reduced, thereby improving a transmission rate and improving data stability.

FIG. 7 is a diagram in which first configuration information includes only different parameters in the foregoing embodiment. Configuration parameters shown in FIG. 7 are the same as those in FIG. 6. To be specific, a number of paging occasions per paging frame of a source cell is the same as that of a target cell, but a paging period of the source cell is different from that of the target cell, and a configuration parameter of random access of the source cell is completely the same as that of the target cell. Further, the network device may determine that the first configuration information includes only the paging period of the target cell and a value of the paging period. In the case shown in FIG. 7, after receiving the first configuration information sent by the network device, the terminal device may initiate random access in the target cell and receive paging in the target cell in the time period based on the paging period of the target cell included in the first configuration information, and the number of paging occasions per paging frame and the configuration parameter of random access of the source cell shown in FIG. 7.

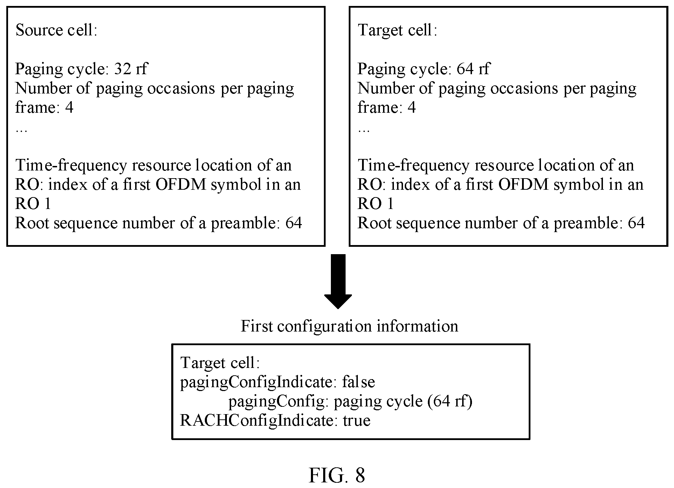

Optionally, the embodiment shown in FIG. 6 may be combined with the embodiment shown in FIG. 7. For example, when a value of at least one piece of indication information shown in FIG. 6 is false, the network device may add, to the first configuration information, a configuration parameter of the source cell that is different from that of the target cell shown in FIG. 7. FIG. 8 is still another diagram of first configuration information. As shown in FIG. 8, a value of indication information related to paging in the first configuration information is false. A network device may add, to the first configuration information, a configuration parameter of a paging process of a source cell that is different from that of a target cell, for example, a paging cycle and a value of the paging cycle shown in FIG. 8.

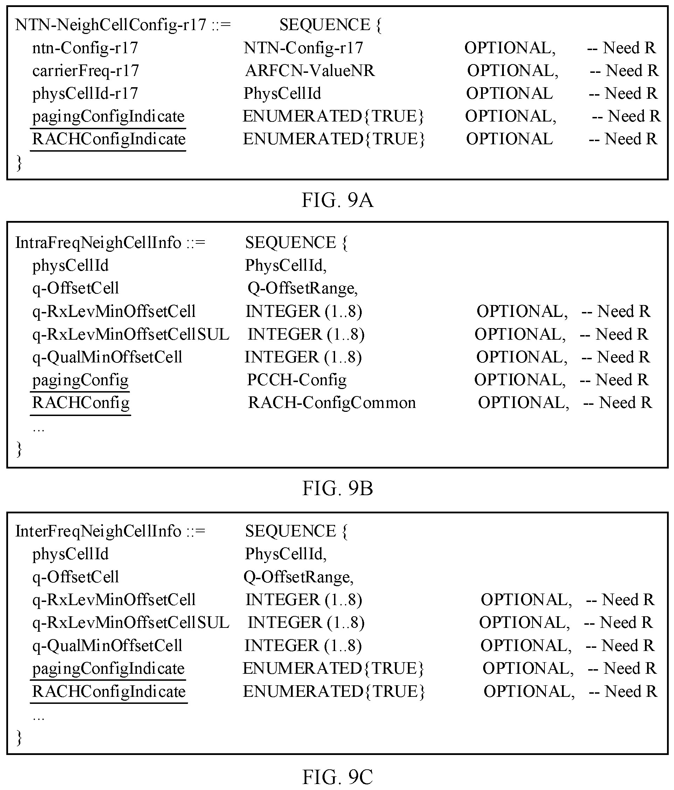

The following describes an embodiment of step S520 in this application with reference to FIG. 9A to FIG. 9C and FIG. 10A and FIG. 10B.

As described above, the first configuration information may be included in the neighboring cell list information sent by the network device. The neighboring cell list information is used to identify a plurality of neighboring cells adjacent to the source cell, and may be used to assist the terminal device in completing a cell reselection process. For example, the neighboring cell list information lists neighboring cell information of each of the plurality of neighboring cells, and the neighboring cell information includes information like a location of the cell, a coverage degree, a neighboring cell frequency, signal quality, signal strength, and a cell identifier. The network device may add, to neighboring cell information of the target cell (the target cell is one of the plurality of neighboring cells, or the terminal device determines the target cell from the plurality of neighboring cells), the first configuration information related to the target cell.

FIG. 9A to FIG. 9C are diagrams in which neighboring cell list information includes first configuration information. FIG. 9A shows that the first configuration information may be set in the parameter list NTN-NeighCellConfig-r17 of the SIB19 message, and a parameter in a dotted line is the first configuration information that is added by the network device to the neighboring cell list information and that is shown in FIG. 6. FIG. 9B shows that the first configuration information may be set in the parameter list IntraFreqNeighCellInfo of the SIB3 message, and a parameter in a dotted line is the first configuration information that is added by the network device to the neighboring cell list information and that is shown in FIG. 7. PCCH-Config shown in the figure may include one or more configuration parameters indicating a paging channel, and RACH-ConfigCommon may include one or more configuration parameters indicating random access. As shown in FIG. 9C, the first configuration information may be further set in a parameter list InterFreqNeighCellInfo of the SIB4 message.

In the foregoing embodiment in which the network device sends the first configuration information through the neighboring cell list information, the network device may notify neighboring cell information of a plurality of neighboring cells in the neighboring cell list information through only one transmission beam, or may notify neighboring cell information of different neighboring cells through different transmission beams based on information like locations of the transmission beams. FIG. 10A and FIG. 10B are diagrams of a transmission beam. As shown in FIG. 10A, the network device may notify neighboring cell information of all neighboring cells through only a beam 1. As shown in FIG. 10B, the network device may notify neighboring cell information of a neighboring cell A through a beam 2, notify neighboring cell information of a neighboring cell B and a neighboring cell C through a beam 3, and notify neighboring cell information of a neighboring cell D through a beam 4. In other words, each transmission beam may be used to notify neighboring cell information of at least one neighboring cell.

According to the foregoing communication method 500, the terminal device may receive paging or initiate access in a time period after the terminal device camps on the target cell and before the terminal device retrieves the SIB1 message of the target cell. In this way, when a user uses the terminal device, a problem that the terminal device cannot receive paging or initiate access in some time periods due to cell reselection of the terminal device does not occur, thereby improving user service experience of the terminal device.

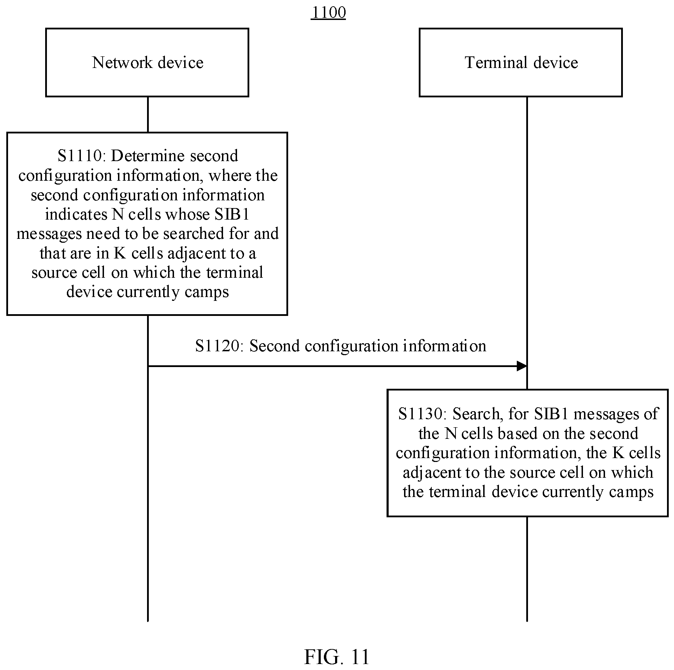

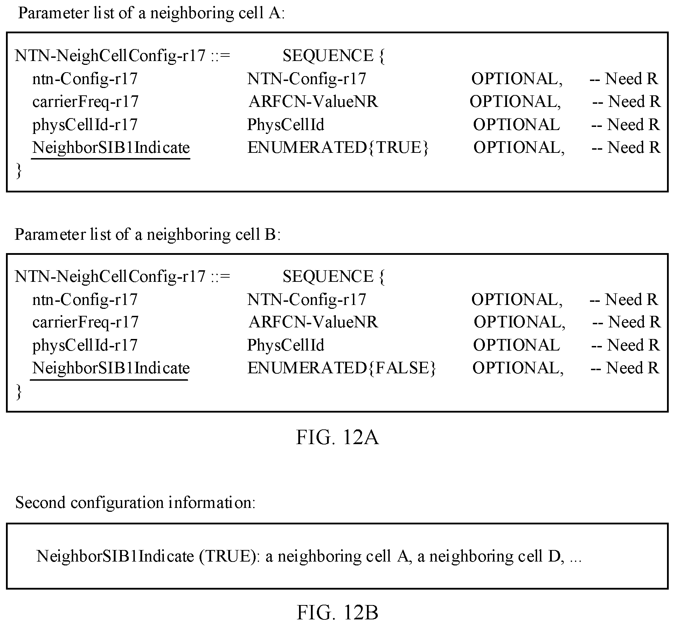

The following describes a communication method 1100 provided in embodiments of this application with reference to FIG. 11 and FIG. 12A and FIG. 12B. The communication method 1100 may be used to resolve the foregoing problems of high power consumption overheads and a long search period of the terminal device.

Specifically, in a cell reselection process of the communication method 1100, after triggering a cell reselection condition, the terminal device measures SSB messages of a plurality of neighboring cells and simultaneously measures SIB1 messages of the plurality of neighboring cells, and then finds a target cell according to a cell reselection rule and camps on the target cell. However, the second configuration information in the communication method 1100 may indicate some neighboring cells in the plurality of neighboring cells, and the SIB1 messages need to be searched in the some neighboring cells. In other words, the second configuration information includes the neighboring cells that have been filtered out and whose SIB1 messages need to be searched for. Therefore, the terminal device only needs to search for the SIB1 messages of the neighboring cells indicated in the second configuration information, and does not need to search for SIB1 messages of all neighboring cells. For example, there are 10 cells adjacent to a source cell, and the second configuration information may indicate that SIB1 messages of four of the cells need to be searched for. In this case, the terminal device originally needs to search for the SIB1 messages of the neighboring cells in 10 periods, and now only needs to search for the SIB1 messages of the neighboring cells in four periods.

FIG. 11 is a schematic interaction flowchart of a communication method 1100 according to an embodiment of this application. The method shown in FIG. 11 may be performed by a terminal device and a network device, or may be performed by a module and/or a component (for example, a chip or an integrated circuit) that is installed in a terminal device and a network device and that has a corresponding function. This is not limited in this application. The network device in the following may be the foregoing access network device. The following uses the terminal device and the network device as an example for description. As shown in FIG. 11, the method 1100 includes the following steps.

Step S1110: The network device determines second configuration information, where the second configuration information indicates N cells whose SIB1 messages need to be searched for and that are in K cells adjacent to a source cell on which the terminal device currently camps, where N is a positive integer, and K is a positive integer greater than N.

Optionally, the second configuration information may include indication information indicating whether SIB1 messages of a plurality of neighboring cells need to be searched for. For example, a SIB1 message of a cell that a value of indication information is true needs to be searched for, and a SIB1 message of a cell that a value of indication information is false does not need to be searched for. Alternatively, the second configuration information may include a cell list that is obtained by the network device through sorting and whose SIB1 messages need to be searched for. For example, if SIB1 messages of a cell A and a cell D need to be searched for, the cell list includes the cell A and the cell D.

Optionally, in this embodiment of this application, the network device may determine the second configuration information based on prior information, where the prior information indicates a probability that a SIB1 message of each cell needs to be searched for. For example, the network device may compare the probability that the SIB1 message of each cell needs to be searched for with a preset probability threshold, for example, 50%. If the probability that the SIB1 message of the cell needs to be searched for is higher than 50%, the value of the indication information corresponding to the cell is true; or if the probability that the SIB1 message of the cell needs to be searched for is lower than 50%, the value of the indication information corresponding to the cell is false. Alternatively, the network device sorts cells whose probabilities are higher than 50% into the cell list.

For example, the network device may determine the prior information based on a distance between a satellite corresponding to a neighboring cell and a satellite corresponding to the source cell. For example, when the distance between the satellite corresponding to the neighboring cell and the satellite corresponding to the source cell is short or the distance is less than a preset distance threshold, the network device determines that a probability that a SIB1 message of the neighboring cell needs to be searched for is high, or the network device sorts the distances between the satellites corresponding to all the neighboring cells and the satellite corresponding to the source cell, and a probability that a SIB1 message of a neighboring cell with a higher ranking needs to be searched for is high.

For example, the network device may alternatively determine the prior information based on an orbit of a satellite corresponding to a neighboring cell and an orbit of a satellite corresponding to the source cell. For example, if the orbit of the satellite corresponding to the neighboring cell is closer to the orbit of the satellite corresponding to the source cell, the probability that the SIB1 message of the neighboring cell needs to be searched for is high.

Step S1120: The network device sends the second configuration information to the terminal device.

An embodiment of step S1120 is similar to the embodiment of step S520. To be specific, the network device may send the second configuration information by sending the neighboring cell list information to the terminal device. The second configuration information may be included in a parameter list of neighboring cell information like NTN-Neigh-CellConfig-r17 in a SIB19 message, IntraFreqNeighCellInfo in a SIB3 message, and InterFreqNeighCellInfo in a SIB4 message. FIG. 12A and FIG. 12B are diagrams in which neighboring cell list information includes second configuration information.

As shown in FIG. 12A, the second configuration information includes indication information NeighborSIB1Indicate indicating whether SIB1 messages of a plurality of neighboring cells need to be searched for. If a value of indication information NeighborSIB1Indicate of a neighboring cell A is true, and a value of indication information NeighborSIB1Indicate of a neighboring cell B is false, a SIB1 message of the neighboring cell A needs to be searched for. In this case, when receiving neighboring cell information of the neighboring cell A in the neighboring cell list information, a terminal device may search for the SIB1 message of the neighboring cell A based on the indication information of the neighboring cell A.

As shown in FIG. 12B, the second configuration information may also include a cell list that is obtained by a network device through sorting and whose SIB1 messages need to be searched for. For example, if SIB1 messages of the cell A and a cell D need to be searched for, the network device may directly send the sorted cell list (including the cell A, the cell D, and the like) to the terminal device.

Step S1130: The terminal device searches, for SIB1 messages of N cells based on the second configuration information, K cells adjacent to a currently camped source cell.

According to the foregoing method, in a cell reselection process, a quantity of SIB1 messages that the terminal device needs to search for is reduced. In this way, power consumption overheads of the terminal device are reduced and a period in which the SIB1 messages of cells are searched for in a time division manner is reduced.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

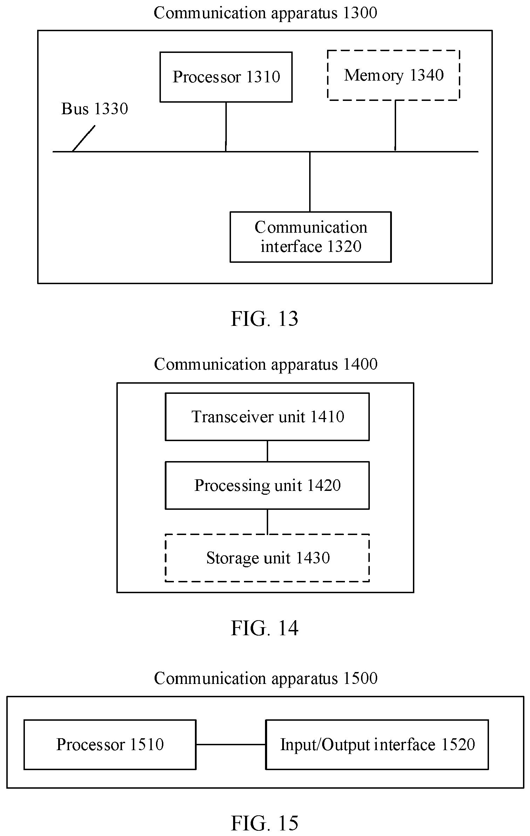

FIG. 13 is a block diagram of a communication apparatus 1300 according to an embodiment of this application. The communication apparatus 1300 includes a processor 1310 and a communication interface 1320. The processor 1310 and the communication interface 1320 may be connected to each other through a bus 1330. The communication apparatus 1300 may be a network device, or may be a terminal device.

Optionally, the communication apparatus 1300 may further include a memory 1340. The memory 1340 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1340 is configured to store related instructions and data.

The processor 1310 may be one or more central processing units (central processing units, CPUs). When the processor 1310 is one CPU, the CPU may be a single-core CPU, or may be a multi-core CPU.

When the communication apparatus 1300 is a terminal device, for example, the communication apparatus 1300 is configured to perform the following operations: receiving first configuration information sent by a network device, and the like.

When the communication apparatus 1300 is a network device, for example, the communication apparatus 1300 is configured to perform the following operations: sending first configuration information to a terminal device.

The content is merely used as an example for description. When the communication apparatus 1300 is a network device/terminal device, the communication apparatus 1300 is responsible for performing the methods or steps related to the network device/terminal device in the foregoing method embodiments.

The foregoing descriptions are merely examples. For specific content, refer to content shown in the method embodiments. For implementations of the operations in FIG. 13, refer to the corresponding descriptions of the method embodiments shown in FIG. 5 and FIG. 11.

FIG. 14 is a block diagram of a communication apparatus 1400 according to an embodiment of this application. The communication apparatus 1400 may be a network device or a terminal device, or may be a chip or a module in a network device or a terminal device, and is configured to implement the methods in the foregoing embodiments. The communication apparatus 1400 includes a transceiver unit 1410 and a processing unit 1420. The following describes the transceiver unit 1410 and the processing unit 1420 by using examples.

The transceiver unit 1410 may include a sending unit and a receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. Unified descriptions are provided herein, and details are not described below again.

When the communication apparatus 1400 is a terminal device, for example, the transceiver unit 1410 is configured to receive first configuration information sent by a network device, and the processing unit 1420 is configured to: based on the first configuration information, receive paging of the terminal device in a target cell and/or initiate random access of the terminal device in the target cell.

When the communication apparatus 1400 is a network device, for example, the processing unit 1420 is configured to determine first configuration information and the like, and the transceiver unit 1410 is configured to send the first configuration information and the like to a terminal device.

The content is merely used as an example for description. When the communication apparatus 1400 is a network device/terminal device, the communication apparatus 1400 is responsible for performing the methods or steps related to

EP 4 780 068 A1

the network device/terminal device in the foregoing method embodiments.

Optionally, the communication apparatus 1400 further includes a storage unit 1430. The storage unit 1430 is configured to store a program or code used to perform the foregoing methods.

The apparatus embodiments shown in FIG. 13 and FIG. 14 are used for implementing the content described in FIG. 5 to FIG. 12A and FIG. 12B. For specific execution steps and methods of the apparatuses shown in FIG. 13 and FIG. 14, refer to the content described in the foregoing method embodiments.

FIG. 15 is a block diagram of a communication apparatus 1500 according to an embodiment of this application. The communication apparatus 1500 is configured to implement functions of a network device/terminal device. The communication apparatus 1500 may be a chip in the network device/terminal device.

The communication apparatus 1500 includes an input/output interface 1520 and a processor 1510. The input/output interface 1520 may be an input/output circuit. The processor 1510 may be a signal processor, a chip, or another integrated circuit that can implement the methods in this application. The input/output interface 1520 is configured to input or output a signal or data.

For example, when the communication apparatus 1500 is a terminal device, the input/output interface 1520 is configured to receive first configuration information from the network device. The processor 1510 is configured to: based on the first configuration information, receive paging of the terminal device in a target cell and/or initiate random access of the terminal device in the target cell, and the like.

For example, the communication apparatus 1500 is a network device, and the processor 1510 is configured to determine first configuration information. The input/output interface 1520 is configured to send the first configuration information to the terminal device.

In a possible implementation, the processor 1510 executes instructions stored in a memory, to implement a function implemented by the network device or the terminal device.

Optionally, the communication apparatus 1500 further includes the memory.

Optionally, the processor and the memory are integrated together.

Optionally, the memory is outside the communication apparatus 1500.

In a possible implementation, the processor 1510 may be a logic circuit, and the processor 1510 inputs/outputs a message or signaling through the input/output interface 1520. The logic circuit may be a signal processor, a chip, or another integrated circuit that can implement the methods in embodiments of this application.

The foregoing descriptions of the communication apparatus 1500 are merely an example for description. The communication apparatus 1500 can be configured to perform the methods in the foregoing embodiments. For specific content, refer to the descriptions of the foregoing method embodiments. Details are not described herein again.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory. The memory is configured to store a computer program or code.

This application further provides a processor. The processor is configured to be coupled to a memory, and configured to perform the method and the function of the network device or the terminal device in any one of the foregoing embodiments.

This application provides a computer program product including instructions. When the computer program product runs on a computer, the methods in the foregoing embodiments are implemented.

This application further provides a computer program. When the computer program is run on a computer, the method in the foregoing embodiment is implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

20

In several embodiments provided in this application, the disclosed system, apparatuses, and method may be implemented in another manner. For example, the foregoing described apparatus embodiment is merely an example. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments in this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of this application shall be subject to the protection scope of the claims.

**Claims**

1. A communication method, wherein the method is applied to a terminal device, and the method comprises:

   receiving first configuration information sent by a network device, wherein the first configuration information is used to configure a configuration parameter of paging and/or a configuration parameter of random access of the terminal device in a target cell, and the target cell is a neighboring cell of a source cell on which the terminal device currently camps; and
   after the target cell is camped on through a cell reselection process and before a system information block SIB1 message of the target cell is retrieved, based on the first configuration information, receiving paging of the terminal device in the target cell and/or initiating random access of the terminal device in the target cell.

2. The method according to claim 1, wherein the first configuration information comprises indication information indicating whether the configuration parameter of paging of the target cell is the same as that of the source cell, and/or whether the configuration parameter of random access of the target cell is the same as that of the source cell; and
   when the configuration parameter of paging of the target cell is the same as that of the source cell, and/or the configuration parameter of a random access procedure of the target cell is the same as that of the source cell, based on the first configuration information, receiving paging of the terminal device in the target cell and/or initiating random access of the terminal device in the target cell comprise/comprises:
   based on the configuration parameter of paging and/or the configuration parameter of the random access procedure of the source cell, receiving paging of the terminal device in the target cell and/or initiating random access of the terminal device in the target cell.

3. The method according to claim 1 or 2, wherein the first configuration information comprises a configuration parameter of paging of the target cell that is different from that of the source cell, and/or a configuration parameter of random access of the target cell that is different from that of the source cell; and
   based on the first configuration information, receiving paging of the terminal device in the target cell and/or initiating random access of the terminal device in the target cell comprise/comprises:
   based on the first configuration information of the target cell and another configuration parameter of paging and/or another configuration parameter of random access of the source cell other than the configuration parameter comprised in the first configuration information, receiving paging of the terminal device in the target cell and/or initiating random access of the terminal device in the target cell.

4. The method according to claim 1, wherein the first configuration information comprises the configuration parameter of paging and/or the configuration parameter of random access of the target cell.

5. The method according to any one of claims 1 to 4, wherein receiving the first configuration information sent by the network device comprises:
receiving neighboring cell list information sent by the network device, wherein the neighboring cell list information comprises neighboring cell information of a plurality of cells, neighboring cell information of each of the plurality of cells comprises a configuration parameter used to configure paging and/or a configuration parameter used to configure random access of the terminal device in each cell, and the plurality of cells comprise the target cell.

6. The method according to claim 5, wherein the first configuration information is set in a parameter list of any one of the following neighboring cell information:
NTN-NeighCellConfig-r17 in a SIB19 message of the target cell, IntraFreqNeighCellInfo in a SIB3 message of the target cell, and InterFreqNeighCellInfo in a SIB4 message of the target cell.

7. The method according to claim 5 or 6, wherein receiving the neighboring cell list information sent by the network device comprises:

receiving the neighboring cell information of the plurality of cells through one transmission beam; or
receiving the neighboring cell information of the plurality of cells through a plurality of transmission beams, wherein each of the plurality of transmission beams is used to notify neighboring cell information of at least one of the plurality of cells.

8. A communication method, wherein the method is applied to a terminal device, and the method comprises:

receiving second configuration information sent by a network device, wherein the second configuration information indicates N cells whose SIB1 messages need to be searched for when the terminal device performs cell reselection; and
searching, for the SIB1 messages of the N cells based on the second configuration information, K cells adjacent to a source cell on which the terminal device currently camps, wherein N is a positive integer, and K is a positive integer greater than N.

9. The method according to claim 8, wherein the second configuration information is determined based on prior information, and the prior information indicates a probability that a SIB1 message of each of the K cells needs to be searched for.

10. The method according to claim 9, wherein the prior information is determined based on an orbit of a satellite corresponding to each of the K cells and an orbit of a satellite corresponding to the source cell, or is determined based on a distance between a satellite corresponding to each of the K cells and a satellite corresponding to the source cell.

11. The method according to any one of claims 8 to 10, wherein receiving the second configuration information sent by the network device comprises:
receiving neighboring cell list information sent by the network device, wherein the neighboring cell list information comprises neighboring cell information of the K cells, and neighboring cell information of the N cells comprises indication information indicating that the SIB1 messages need to be searched for.

12. The method according to claim 11, wherein the second configuration information is set in a parameter list of any one of the following neighboring cell information:
NTN-NeighCellConfig-r17 in SIB19 information, IntraFreqNeighCellInfo in SIB3 information, and InterFreqNeigh-CellInfo in SIB4 information.

13. A communication method, wherein the method is applied to a network device, and the method comprises:

determining first configuration information, wherein the first configuration information is used to configure, after a terminal device camps on a target cell through a cell reselection process and before the terminal device retrieves a system information block SIB1 message of the target cell, a configuration parameter of paging and/or a configuration parameter of random access of the terminal device in the target cell, and the target cell is a neighboring cell of a source cell on which the terminal device currently camps; and

sending the first configuration information to the terminal device.

14. The method according to claim 13, wherein the first configuration information comprises indication information indicating whether the configuration parameter of paging of the target cell is the same as that of the source cell, and/or whether the configuration parameter of random access of the target cell is the same as that of the source cell.

15. The method according to claim 13 or 14, wherein the first configuration information comprises a configuration parameter of paging of the target cell that is different from that of the source cell, and/or a configuration parameter of random access of the target cell that is different from that of the source cell.

16. The method according to claim 15, wherein the first configuration information comprises the configuration parameter of paging and/or the configuration parameter of random access of the target cell.

17. The method according to any one of claims 13 to 16, wherein sending the first configuration information to the terminal device comprises:

sending neighboring cell list information to the terminal device, wherein the neighboring cell list information comprises neighboring cell information of a plurality of cells, neighboring cell information of each of the plurality of cells comprises a configuration parameter used to configure paging and/or a configuration parameter used to configure random access of the terminal device in each cell, and the plurality of cells comprise the target cell.

18. The method according to claim 17, wherein the first configuration information is set in a parameter list of any one of the following neighboring cell information:
NTN-NeighCellConfig-r17 in a SIB19 message of the target cell, IntraFreqNeighCellInfo in a SIB3 message of the target cell, and InterFreqNeighCellInfo in a SIB4 message of the target cell.

19. The method according to claim 17 or 18, wherein sending the neighboring cell list information to the terminal device comprises:

sending the neighboring cell list information to the terminal device through one transmission beam; or
sending the neighboring cell list information to the terminal device through a plurality of transmission beams, wherein each of the plurality of transmission beams is used to notify neighboring cell information of at least one of the plurality of cells.

20. A communication method, wherein the method is applied to a network device, and the method comprises:

determining second configuration information, wherein the second configuration information indicates, when a terminal device performs cell reselection, N cells whose SIB1 messages need to be searched for and that are in K cells adjacent to a source cell on which the terminal device currently camps, wherein N is a positive integer, and K is a positive integer greater than N; and
sending the second configuration information to the terminal device.

21. The method according to claim 20, wherein determining the second configuration information comprises:
determining the second configuration information based on prior information, wherein the prior information indicates a probability that a SIB1 message of each of the K cells needs to be searched for.

22. The method according to claim 21, wherein before determining the second configuration information, the method further comprises:
determining the prior information based on an orbit of a satellite corresponding to each of the K cells and an orbit of a satellite corresponding to the source cell, or a distance between a satellite corresponding to each of the K cells and a satellite corresponding to the source cell.

23. The method according to any one of claims 20 to 22, wherein sending the second configuration information to the terminal device comprises:
sending neighboring cell list information to the terminal device, wherein the neighboring cell list information comprises neighboring cell information of the K cells, and neighboring cell information of the N cells comprises indication information indicating that the SIB1 messages need to be searched for.

24. The method according to claim 23, wherein the second configuration information is set in a parameter list of any one of the following neighboring cell information:
NTN-NeighCellConfig-r17 in SIB19 information, IntraFreqNeighCellInfo in SIB3 information, and InterFreqNeigh-CellInfo in SIB4 information.

25. The method according to any one of claims 1 to 24, wherein the method is applied to a transparent forwarding scenario and/or a regeneration mode scenario of satellite communication.

26. A communication apparatus, wherein the apparatus comprises a unit configured to perform the method according to any one of claims 1 to 12, or a unit configured to perform the method according to any one of claims 13 to 24.

27. A communication apparatus, comprising a processor, wherein the processor is configured to: by executing a computer program or instructions, enable the communication apparatus to perform the method according to any one of claims 1 to 12, or enable the communication apparatus to perform the method according to any one of claims 13 to 24.

28. A communication system, comprising a network device and a terminal device, wherein

the network device is configured to perform the method according to any one of claims 1 to 12; and
the terminal device is configured to perform the method according to any one of claims 13 to 24.

29. A computer-readable storage medium, wherein the computer-readable storage medium stores a computer program or instructions, and when the computer program or the instructions are run on a computer,

the method according to any one of claims 1 to 12 is performed; or
the method according to any one of claims 13 to 24 is performed.

30. A computer program product, comprising instructions, wherein when the instructions are run on a computer,

the method according to any one of claims 1 to 12 is performed; or
the method according to any one of claims 13 to 24 is performed.

| Terminal device | Access network device | Core network | External network |

FIG. 1

5G access
network device

5G user plane function
(UPF) network element

Data network

5G new radio

NG interface

Terminal
device

Terrestrial
station

Xn interface

5G access and mobility
management function
(AMF) network element

5G new radio

Terminal
device

5G access
network device

5G session management
function (SMF) network
element

5G control plane

FIG. 2

EP 4 780 068 A1

300

```
┌─────────────────────────────────────────────────────┐
│   A terminal device triggers a cell reselection condition   │
└─────────────────────────────────────────────────────┘
                            │
┌─────────────────────────────────────────────────────┐
│   Measure SSB messages of a plurality of neighboring cells   │
└─────────────────────────────────────────────────────┘
                            │
┌─────────────────────────────────────────────────────┐
│  Measure SIB1 messages of the plurality of neighboring cells  │
└─────────────────────────────────────────────────────┘
                            │
┌─────────────────────────────────────────────────────┐
│ Find a target cell according to a cell reselection rule and camp on │
│                    the target cell                    │
└─────────────────────────────────────────────────────┘
```

FIG. 3

400

```
┌─────────────────────────────────────────────────────┐
│   A terminal device triggers a cell reselection condition   │
└─────────────────────────────────────────────────────┘
                            │
┌─────────────────────────────────────────────────────┐
│   Measure SSB messages of a plurality of neighboring cells   │
└─────────────────────────────────────────────────────┘
                            │
┌─────────────────────────────────────────────────────┐
│ Determine a target cell in a cell reselection process and camp on │
│                    the target cell                    │
└─────────────────────────────────────────────────────┘
                            │
┌─────────────────────────────────────────────────────┐
│         Search for a SIB1 message of the target cell         │
└─────────────────────────────────────────────────────┘
```

FIG. 4

500

```
┌─────────────────────┐              ┌─────────────────────┐
│   Network device    │              │   Terminal device   │
└─────────────────────┘              └─────────────────────┘
           │                                    │
┌──────────────────────────┐                    │
│   S510: Determine first  │                    │
│ configuration information,│                   │
│   where the first         │                   │
│   configuration           │                   │
│ information is used to     │                  │
│ configure a               │                   │
│ configuration parameter of │                  │
│ paging and/or a            │                  │
│ configuration             │                   │
│ parameter of random access │                  │
│ of the terminal device     │                  │
│ in a target cell           │                  │
└──────────────────────────┘                    │
           │                                    │
           │  S520: First configuration information
           │───────────────────────────────────▶│
           │                                    │
           │              ┌──────────────────────────┐
           │              │  S530: Based on the first │
           │              │ configuration information, │
           │              │ receive paging of the      │
           │              │ terminal device in the     │
           │              │ target cell and/or         │
           │              │ initiate random access of  │
           │              │ the terminal device in the │
           │              │ target cell                │
           │              └──────────────────────────┘
           │                                    │
```

FIG. 5

Source cell:

Paging cycle: 32 rf
Number of paging occasions per paging
frame: 4

...

Time-frequency resource location of an
RO: index of a first OFDM symbol in an
RO 1
Root sequence number of a preamble: 64

Target cell:

Paging cycle: 64 rf
Number of paging occasions per paging
frame: 4

...

Time-frequency resource location of an
RO: index of a first OFDM symbol in an
RO 1
Root sequence number of a preamble: 64

First configuration information

Target cell:
pagingConfigIndicate: false
RACHConfigIndicate: true

FIG. 6

Source cell:

Paging cycle: 32 rf
Number of paging occasions per paging
frame: 4

...

Time-frequency resource location of an
RO: index of a first OFDM symbol in an
RO 1
Root sequence number of a preamble: 64

Target cell:

Paging cycle: 64 rf
Number of paging occasions per paging
frame: 4

...

Time-frequency resource location of an
RO: index of a first OFDM symbol in an
RO 1
Root sequence number of a preamble: 64

First configuration information

Target cell:
pagingConfig: paging cycle (64 rf)
RACHConfig: none

FIG. 7

Source cell:

Paging cycle: 32 rf
Number of paging occasions per paging
frame: 4

...

Time-frequency resource location of an
RO: index of a first OFDM symbol in an
RO 1
Root sequence number of a preamble: 64

Target cell:

Paging cycle: 64 rf
Number of paging occasions per paging
frame: 4

...

Time-frequency resource location of an
RO: index of a first OFDM symbol in an
RO 1
Root sequence number of a preamble: 64

First configuration information

Target cell:
pagingConfigIndicate: false
          pagingConfig: paging cycle (64 rf)
RACHConfigIndicate: true

FIG. 8

```
NTN-NeighCellConfig-r17 ::=          SEQUENCE {
    ntn-Config-r17                   NTN-Config-r17           OPTIONAL,    -- Need R
    carrierFreq-r17                  ARFCN-ValueNR            OPTIONAL,    -- Need R
    physCellId-r17                   PhysCellId               OPTIONAL     -- Need R
    pagingConfigIndicate             ENUMERATED{TRUE}         OPTIONAL,    -- Need R
    RACHConfigIndicate               ENUMERATED{TRUE}         OPTIONAL     -- Need R
}
```

FIG. 9A

```
IntraFreqNeighCellInfo ::=          SEQUENCE {
    physCellId                      PhysCellId,
    q-OffsetCell                    Q-OffsetRange,
    q-RxLevMinOffsetCell            INTEGER (1..8)           OPTIONAL,  -- Need R
    q-RxLevMinOffsetCellSUL         INTEGER (1..8)           OPTIONAL,  -- Need R
    q-QualMinOffsetCell             INTEGER (1..8)           OPTIONAL,  -- Need R
    pagingConfig                    PCCH-Config              OPTIONAL,  -- Need R
    RACHConfig                      RACH-ConfigCommon        OPTIONAL,  -- Need R
    ...
}
```

FIG. 9B

```
InterFreqNeighCellInfo ::=          SEQUENCE {
    physCellId                      PhysCellId,
    q-OffsetCell                    Q-OffsetRange,
    q-RxLevMinOffsetCell            INTEGER (1..8)           OPTIONAL,  -- Need R
    q-RxLevMinOffsetCellSUL         INTEGER (1..8)           OPTIONAL,  -- Need R
    q-QualMinOffsetCell             INTEGER (1..8)           OPTIONAL,  -- Need R
    pagingConfigIndicate            ENUMERATED{TRUE}         OPTIONAL,  -- Need R
    RACHConfigIndicate              ENUMERATED{TRUE}         OPTIONAL,  -- Need R
    ...
}
```

FIG. 9C

5G access
network device
(including gNB)

Beam 1
(neighboring cell A,
neighboring cell B,
neighboring cell C, and
neighboring cell D)

Terminal
device

FIG. 10A

5G access
network device
(including gNB)

Beam 2
(neighboring cell A)

Beam 4
(neighboring cell D)

Beam 3
(neighboring
cell B and
neighboring
cell C)

Terminal
device

FIG. 10B

1100

```
┌─────────────────────┐                          ┌─────────────────────┐
│   Network device    │                          │   Terminal device   │
└─────────────────────┘                          └─────────────────────┘
```

S1110: Determine second
configuration information, where the
second configuration information
indicates N cells whose SIB1
messages need to be searched for and
that are in K cells adjacent to a
source cell on which the terminal
device currently camps

S1120: Second configuration information

S1130: Search, for SIB1 messages of
the N cells based on the second
configuration information, the K cells
adjacent to the source cell on which
the terminal device currently camps

FIG. 11

Parameter list of a neighboring cell A:

```
NTN-NeighCellConfig-r17 ::=        SEQUENCE {
    ntn-Config-r17              NTN-Config-r17          OPTIONAL,    -- Need R
    carrierFreq-r17            ARFCN-ValueNR           OPTIONAL,    -- Need R
    physCellId-r17             PhysCellId              OPTIONAL     -- Need R
    NeighborSIB1Indicate       ENUMERATED{TRUE}        OPTIONAL,    -- Need R
}
```

Parameter list of a neighboring cell B:

```
NTN-NeighCellConfig-r17 ::=        SEQUENCE {
    ntn-Config-r17              NTN-Config-r17          OPTIONAL,    -- Need R
    carrierFreq-r17            ARFCN-ValueNR           OPTIONAL,    -- Need R
    physCellId-r17             PhysCellId              OPTIONAL     -- Need R
    NeighborSIB1Indicate       ENUMERATED{FALSE}       OPTIONAL,    -- Need R
}
```

FIG. 12A

Second configuration information:

NeighborSIB1Indicate (TRUE): a neighboring cell A, a neighboring cell D, ...

FIG. 12B

Communication apparatus 1300

Bus 1330

Processor 1310

Memory 1340

Communication
interface 1320

FIG. 13

Communication apparatus 1400

Transceiver unit 1410

Processing unit 1420

Storage unit 1430

FIG. 14

Communication apparatus 1500

Processor 1510

Input/Output interface 1520

FIG. 15

## INTERNATIONAL SEARCH REPORT

| International application No. |
| --- |
| **PCT/CN2024/117395** |

| A. | CLASSIFICATION OF SUBJECT MATTER |
| --- | --- |

H04W 36/00(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, DWPI, CNKI, IEEE: 接入, 相邻, 目标, 目的, 切换, 小区, 配置, 参数, 随机, 接入, 系统消息, 系统信息, 寻呼, 重选, before, paging, SIB, configuration, target, reselect, access, random

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114125953 A (HUAWEI TECHNOLOGIES CO., LTD.) 01 March 2022 (2022-03-01) description, paragraphs 146-289 | 1-30 |
| A | CN 115699874 A (BEIJING XIAOMI MOBILE SOFTWARE CO., LTD.) 03 February 2023 (2023-02-03) entire document | 1-30 |
| A | US 2020236601 A1 (GUANGDONG OPPO MOBILE TELECOMMUNICATIONS CORP., LTD.) 23 July 2020 (2020-07-23) entire document | 1-30 |
| A | US 2023269635 A1 (APPLE INC.) 24 August 2023 (2023-08-24) entire document | 1-30 |
| A | BLACKBERRY UK LTD. "Further Considerations on Reselection to SIB11bis Neighbour Cell" *3GPP TSG-RAN WG2 Meeting #84, R2-134173,* 15 November 2013 (2013-11-15), entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 November 2024** | **22 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 780 068 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 114125953 | A | 01 March 2022 | WO | 2022042319 | A1 | 03 March 2022 |
| | | | | EP | 4195771 | A1 | 14 June 2023 |
| CN | 115699874 | A | 03 February 2023 | WO | 2022246829 | A1 | 01 December 2022 |
| | | | | EP | 4351210 | A1 | 10 April 2024 |
| | | | | US | 2024267757 | A1 | 08 August 2024 |
| US | 2020236601 | A1 | 23 July 2020 | US | 2021144608 | A1 | 13 May 2021 |
| | | | | EP | 3644639 | A1 | 29 April 2020 |
| | | | | WO | 2019036933 | A1 | 28 February 2019 |
| | | | | AU | 2017429195 | A1 | 06 February 2020 |
| | | | | CN | 111095971 | A | 01 May 2020 |
| US | 2023269635 | A1 | 24 August 2023 | WO | 2022082632 | A1 | 28 April 2022 |
| | | | | CN | 116391391 | A | 04 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311272468